# EUROPEAN PATENT SPECIFICATION

(11) **EP 4 049 787 B1**
(45) Date of publication and mention of the grant of the patent: **27.12.2023**
(21) Application number: 22156952.8
(22) Date of filing: 16.02.2022
(51) Int. Cl.: B24B 9/10, B65G 49/06, B24B 23/02, C03B 33/03, B24B 49/00, B24B 41/06, B24B 27/00, B23Q 7/18

(54) **A MACHINE AND A METHOD FOR PROCESSING LATERAL EDGES OF GLASS PLATES, PLATES OF STONE MATERIAL OR PLATES OF SYNTHETIC MATERIAL**
MASCHINE UND VERFAHREN ZUM BEARBEITEN VON SEITENKANTEN VON GLASPLATTEN, STEINPLATTEN ODER KUNSTSTOFFPLATTEN
MACHINE ET PROCÉDÉ POUR TRAITER LES BORDS LATÉRAUX DE PLAQUES DE VERRE, DE PLAQUES EN PIERRE OU DE PLAQUES EN MATIÈRE SYNTHÉTIQUE

(30) Priority: 25.02.2021 IT 202100004472
(43) Date of publication of application: 31.08.2022
(73) Proprietor: Biesse S.p.A., 61122 Chiusa di Ginestreto (Pesaro Urbino) (IT)
(72) Inventor: SELCI, Roberto, I-61122 Chiusa di Ginestreto (Pesaro Urbino) (IT)
(74) Representative: Notaro, Giancarlo

(56) References cited:
- EP-A1- 0 913 231
- EP-A2- 1 201 612
- WO-A1-2013/100126
- JP-B2- 4 305 376
- US-A- 5 143 196

## Description

### Field of the invention

The present invention relates to machines and methods for processing (in particular for grinding), edges of glass plates, plates of stone material or plates of synthetic material.

### Prior art

In the field of machines for grinding lateral edges of plates, a first category of machines called "bilateral machines" is known, in which the glass plate to be machined is arranged horizontally, and advances between two stationary lateral benches carrying aligned series of grinding tools, which sequentially engage two opposite lateral edges of the plate as it advances. Machines of this type may comprise a first section oriented in a first direction, for processing two opposite edges of the plate, and a second section arranged at 90° with respect to the first section of the machine, also having two lateral benches of grinding tool. After the plate reaches the end of the first section of the machine that processes a first pair of opposite edges of the plate, the plate itself is transported in a direction orthogonal to the direction previously followed, to enable processing of the second pair of lateral edges of the plate in the second section of the machine.

In the field of machines for grinding lateral edges of plates, so-called "vertical rectilinear machines" are also known, in which the plate proceeds in a single conveying longitudinal direction, remaining in a substantially vertical plane. Known vertical rectilinear machines have a conformation consisting of a main base where the plate movement system and the units responsible for carrying out the processing action of the plate edge reside. During the grinding process, the plate is supported in a substantially vertical position by a backrest, having an inclination of a few degrees with respect to the vertical plane, so as to allow a stable support of the plate during the whole processing stage. The aforesaid backrest, in addition to being located along the processing station, extends both in the loading area and in the unloading area of the machine, in order to allow the operator to deposit the product to be processed at the entrance of the machine, and to pick up the machined product at the exit of the machine. Vertical machines are equipped with a series of tools arranged in sequence, able to perform the finishing of the edge of a plate in a single processing task, by removing a layer of material whose thickness can be determined by the operator. In these machines, to perform the processing of one or more edges of a plate, even when it has a rectangular geometric shape, it is necessary to perform the processing of only one side of the plate at a time. The operator places the plate on the backrest at the machine entrance, and then moves near the backrest at the machine exit to pick up the plate after processing one edge of the plate, and then brings it back to the machine entrance, rotating the plate into a position suitable for processing another edge of the plate. Known machines of this type do not allow corrections in the geometry of the product (which may be due to imperfections in the previous cutting operations), and only allow processing of each edge of the plate with the typical quality of a grinding, polishing and chamfering operation obtained by means of the set of tools provided in the machine. The operator may adjust the working depth of the tools in the plate and the speed of advancement of the plate, while the rotation speed of the grinding tools is fixed as a rule.

Vertical machines are also known for grinding edges of plates, which provide for the possibility of varying the configuration of the sequence of tools of the machining unit in order to meet different needs of shape and surface quality of the edge to be machined.

A machine according to the preamble of claim 1 is known from document JP 4305376 B2**.**

Document EP1201612A2 shows a machine for breaking a glass plate along an incision line and for separating the two plate portions obtained thereby, in which movable gripping units are provided, which are engaged on the plate on both sides of the breaking line, after the breaking operation has been performed, and which are then moved to separate the two plate portions from each other.

### Object of the invention

A first object of the invention is to propose a machine that is capable of grinding the edges of glass plates or plates of stone material or synthetic material, while keeping the plate in a horizontal position, so as to also be able to perform operations of squaring of the product and/or correction of the dimensions based on the nominal project dimensions.

Another object is to provide a horizontal machine of the type indicated above, which is capable of processing the edges of the plate - one after the other - and in which, at least in the case of relatively large plates, the plate must be located in position - with respect to the unit of machining tools - only at the beginning of the cycle after loading the plate onto the machine, without having to repeat this operation each time that a new lateral edge of the plate has to be machined.

Another object of the invention is that of producing a machine of the type indicated above in which the plate can be loaded and unloaded either in a totally automatic manner, or manually.

Another object of the invention is that of producing a machine of the type indicated above in which the entire cycle of processing the different edges of the plate, including the repositioning operations of the plate that are necessary each time it is required to proceed with the processing of a new edge of the plate, can be performed fully automatically.

Another object of the invention is to provide a machine of the type indicated above, which is equipped with a group of plate gripping members for gripping the plate to be processed, which is arranged so as to be automatically reconfigurable as a function of the shape and size of the plate to be gripped.

Another object of the invention is to provide a machine of the type indicated above in which it is - in any case - possible to reposition the plate for processing a new edge of the plate even with manual operations.

Another object of the invention is to provide a machine of the type indicated above in which the plate machining unit may include both a series of grinding tools intended to carry out a sequence of grinding operations on the edges of the plate, and devices for carrying out auxiliary processes, such as devices for making chamfers or curved profiles at the corners of the plate.

Yet another object of the invention is to provide a machine of the type indicated above which can be used both as a stand-alone machine and as a machine forming part of a production line including additional machines upstream and/or downstream of the machine according to the invention, to carry out an entire processing cycle of the plate.

### Summary of the invention

In order to achieve one or more of the aforesaid objects, the invention is directed to a machine for processing edges of glass plates, plates of stone material or plates of synthetic material, comprising the characteristics of claim 1.

In a preferred embodiment, the carriage carrying the plate gripping members can also be moved by an electronically-controlled actuator device in a transverse direction, orthogonal to said conveying longitudinal direction, so that after processing of a lateral edge of the plate, the plate can be moved transversely to the conveying longitudinal direction into a position in which it can be rotated around said vertical axis without interfering with said stationary machining unit, after which the plate can be brought back to said starting position to start processing of another edge of the plate.

Again in the case of the preferred embodiment, a conveyor device is associated with the stationary processing unit for advancing a plate along said conveying longitudinal direction in such a way as to bring an edge of the plate to engage the grinding tools of the stationary machining unit, in succession. The device for actuating the longitudinal movement of the carriage carrying the group of plate gripping members is controlled in such a way as to move the carriage in synchronism with the movement imparted to the plate by said conveyor device.

In one example, the conveyor device associated with the machining unit comprises an upper belt conveyor and a lower belt conveyor positioned and configured to receive a plate therebetween, in such a way as to advance it in the conveying longitudinal direction.

According to another preferred characteristic of the invention, the carriage carries the gripping members, individually or in groups, in positions which are adjustable by means of electronically-controlled actuator devices. Preferably, the entire group of gripping members is carried by the carriage in a rotatable way around a vertical axis, and may be oriented around this vertical axis by means of another electronically-controlled actuator device.

According to a another characteristic of the invention, the machine comprises a plate positioning system, to locate the plate in position with respect to the stationary machining unit along the longitudinal direction and along the transverse direction, at the beginning of a processing cycle, before locking the plate onto said group of plate gripping members, which locates it in position with respect to the vertical direction. After processing of a first lateral edge of the plate, the group of gripping members is always kept engaged on the plate until processing of all the lateral edges of the plate that are to be machined has been completed, so that the operation for locating the plate in position does not have to be repeated again.

In one example, this positioning system comprises an abutment element, which can be temporarily positioned in a raised position to engage the front edge of a plate to be processed against it. Furthermore, the positioning system comprises a side wall for supporting the plate, which can be moved by an actuator device transversely with respect to the aforesaid conveying longitudinal direction, to transversely push a plate to be processed up to a predetermined transverse position with respect to the tools of said stationary machining unit, corresponding to a certain working depth of the tools on the plate.

Thanks to the aforesaid characteristics, the machine according to the invention allows a series of important advantages to be obtained: the machine allows positioning of the plate gripping members in a completely automatic way, according to the shape and size of the plate to be processed. The machine gives the possibility to carry out the operations of loading the plate at the machine entrance, and unloading the plate from the machine exit in a completely automatic way. The machine is also suitable for enabling both loading and unloading of the plate at the upstream end of the machine. The machine according to the invention can be equipped with devices to perform chamfers or curved profiles at the corners of the plate. Furthermore, the machine according to the invention may also be used in combination with machines to perform further drilling and milling operations of the plate, arranged upstream and/or downstream of the machine according to the invention. One of the advantages deriving from keeping the plate in a horizontal position consists in the possibility of making the cycle of operations required to reposition the plate completely automatic, after processing one edge of the plate, in order to proceed with the processing of another edge of the plate. A further advantage deriving from the horizontal positioning of the plate consists in the possibility of carrying out squaring operations of the plate and/or operations to bring the plate to the project dimensions. Another advantage consists in the fact that the operations necessary to locate the plate in position with respect to the machining unit must be carried out only at the beginning of the machining cycle, before machining a first edge of the plate, without the need to repeat these operations when processing the remaining edges of the plate. Finally, as already indicated, a significant advantage of the machine according to the invention consists in the fact that the machine can be set up in a completely automatic way, thanks to the fact that the plate gripping members are adjustable in position by means of electronically-controlled actuators, depending on the shape and size of the plate. The aforesaid gripping members may be of any known type, in particular, for example, vacuum cups or gripping clamps.

In a variant, the machine is arranged with two or more carriages carrying respective units of gripping members to carry respective plates to be processed, each carriage being displaceable in the conveying longitudinal direction and in the transverse direction by means of respective electronically-controlled actuator devices.

The invention is also directed at the method that can be implemented with the machine of the invention.

### Detailed description of the invention

Further characteristics and advantages of the invention will become apparent from the description that follows with reference to the attached drawings, provided purely by way of non-limiting example, wherein:
- Figure 1 is a schematic perspective view of an embodiment of the machine according to the invention,
- Figures 2-7 illustrate successive steps of a processing cycle carried out by means of the machine of Figure 1,
- Figure 8 illustrates an implementation of the machine of Figure 1 with an inlet upstream of the machine and an unloading area downstream of the machine,
- Figure 9 illustrates a variant with inlet and unloading both arranged upstream of the machine,
- Figure 10 illustrates a further perspective view of the machine of Figure 1,
- Figure 10A shows a cross-sectional view on an enlarged scale of the carriage movable in the X direction of the machine, carrying the plate gripping unit,
- Figure 11 illustrates a further perspective view of the machine of Figure 1,
- Figure 12 illustrates a plan view of the machine of Figure 1,
- Figures 13A, 13B, 14 are perspective views of the machining unit forming part of the machine of Figure 1,
- Figures 15,16 show a front view and a perspective view of the machining unit of the machine of Figure 1,
- Figure 17 illustrates a detail of the machine of Figure 1,
- Figure 18 illustrates a detail of Figure 17 on an enlarged scale,
- Figure 19 illustrates an additional detail of the machine of Figure 1,
- Figure 20 illustrates a detail of Figure 19 on an enlarged scale,
- Figure 21 illustrates the same detail as Figure 20 at a successive step of its operating cycle,
- Figures 22-28 are perspective views that schematically illustrate the use of the machine of Figure 1 with glass plates having different shapes and sizes, and
- Figures 29, 30 are plan views of two variants of the machine according to the invention.

In the drawings, the reference number 1 indicates - in its entirety - a horizontal straight machine for processing, in particular grinding, of the lateral edges of glass plates, stone material plates or synthetic material plates. The machine 1 comprises a stationary structure, indicated - in its entirety - by the reference number 2, defining a work area protected by safety barriers 3.

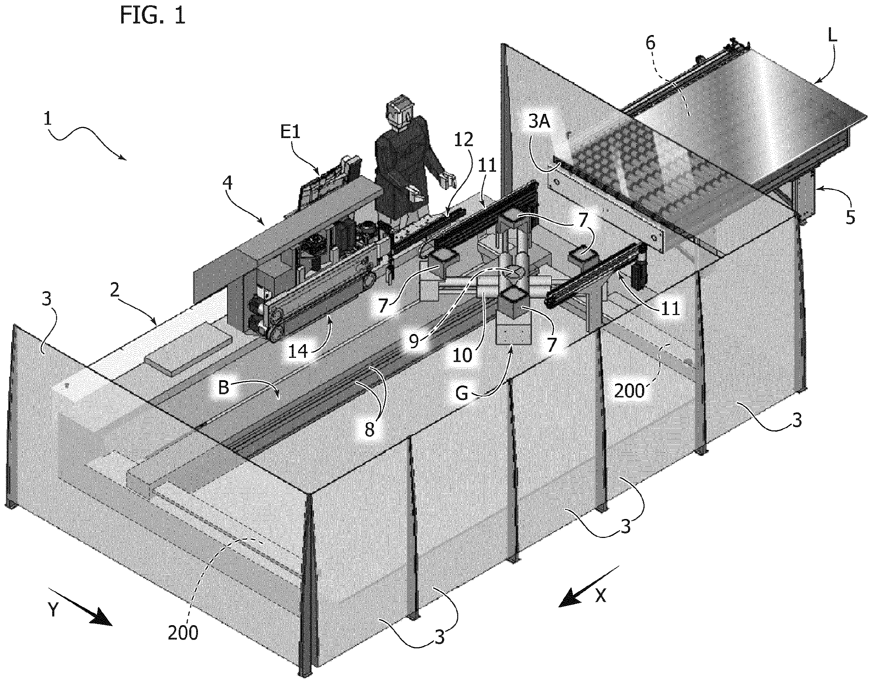

On one side of the stationary structure 2 there is a stationary machining unit 4, described in detail below, including a series of machining tools, in particular grinding tools (not visible in Figure 1) aligned along a conveying longitudinal direction X of the plates.

A plate intended to be machined by the unit 4 is made to advance in the X direction, keeping it in a horizontal position, so as to bring a lateral edge of the plate to engage the tools of the unit 4, in succession.

In the example illustrated, upstream of the machine 1 there is a table 5 with a roller surface 6, which receives thereabove a plate L intended to be subjected to a processing cycle in the machine 1. To this end, the wall 3 adjacent to the table 5 has an opening 3A through which the plate L can be introduced into the working area A of the machine 1.

As will also be indicated below, the systems described and illustrated here for loading a plate into the machine and unloading a plate from the machine are provided purely by way of non-limiting example. As it will also be evident from the following, systems can be associated with the machine according to the invention to carry out the loading and/or unloading of the plate in a completely automatic way, as well as it is possible to envisage, in addition to or alternatively, that the loading operations and/or unloading are done manually. As already indicated, the machine according to the invention is suitable for use as a stand-alone machine, or also as a machine forming part of a production line, in which case the plates received by the machine come from a section of the production line upstream of the machine and, after processing, continue towards a subsequent section of the production line.

The machine 1 is set up with a gripping unit for the plate L, indicated - in its entirety - with the reference G. The gripping unit G comprises a group of gripping members 7 made in any known way. In a preferred example, each gripping member 7 is a suction cup member, which can be activated by vacuum.

The suction cup gripping members are completely conventional devices currently used in plate processing machines and for this reason they are not described in detail here. Typically, each suction cup member 7 has an upper suction cup intended to engage the lower face of a plate L so as to define an isolated chamber with respect to the external environment, which is placed in communication with a vacuum source in order to make the plate strongly adhere to the suction cup.

The gripping members 7 can also be made according to any known alternative technique, for example they can be in the form of clamp devices.

An important characteristic of the machine according to the invention lies in the fact that the gripping unit G is movable in the conveying longitudinal direction X of the plate L.

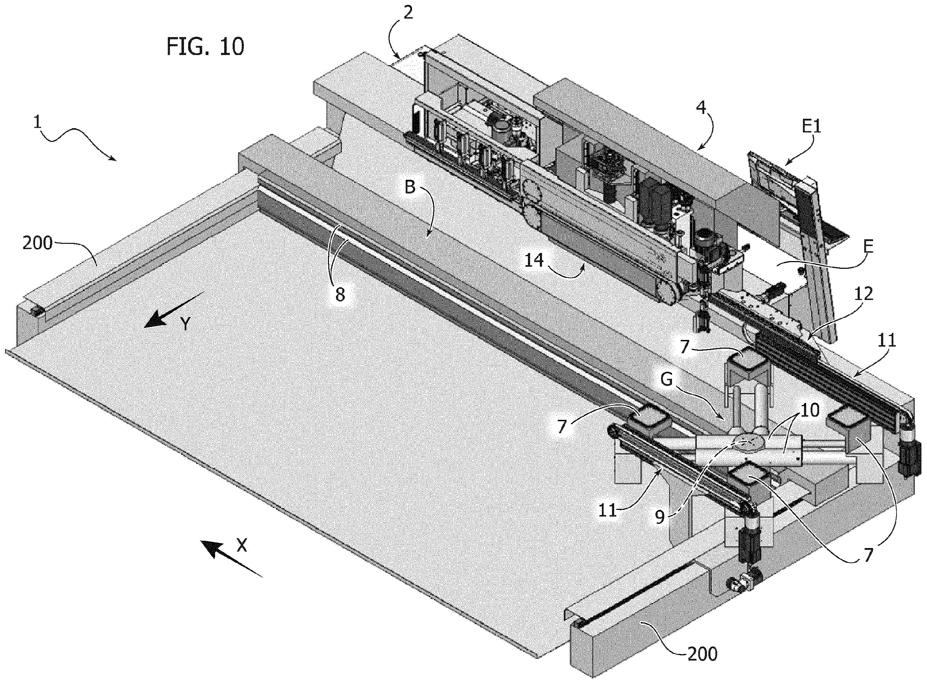

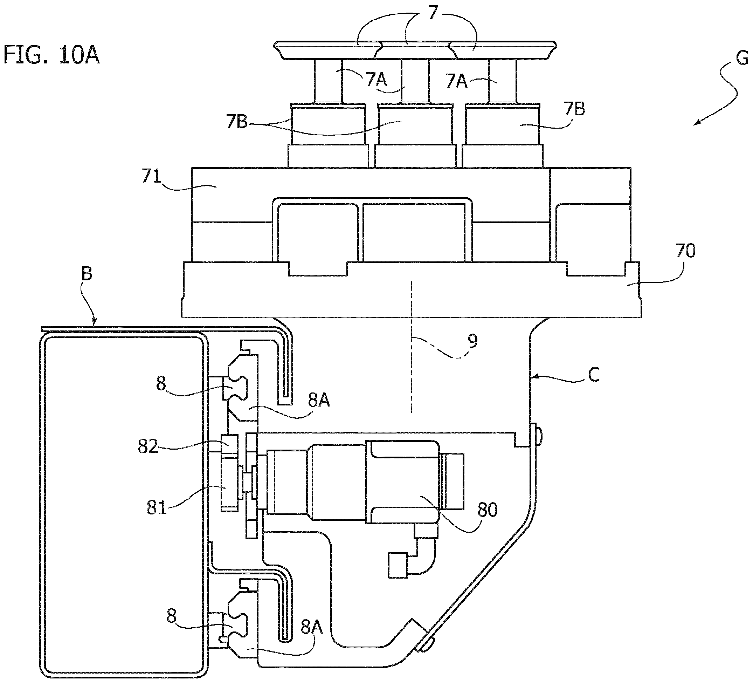

In the embodiment illustrated here, the gripping unit G is supported at its base by a carriage C (see for example Figures 10 and 10A), which is slidably mounted by means of shoes 8A (Figure 10A) on longitudinal guides 8 of a beam B extending parallel to the conveying longitudinal direction X. The electronically-controlled actuator device that controls the movement of the carriage C along the beam B can be, for example, a servo-controlled electric motor 80 (Figure 10A), carried by the carriage C, which rotates a pinion 81 engaging a stationary rack 82 extending in the X direction and fixed to the beam B.

Figure 10A also shows the vertical rotation axis 9 of the unit G of the gripping members 7. The unit G has a base structure 70 rotatably mounted on the carriage C around the axis 9. The carriage C is also associated with a servo-controlled electric motor (not shown) which controls the rotation of the unit G around the vertical axis 9.

The base structure 70 of the unit G carries the gripping members 7 so as to allow adjustment of the position of the gripping members 7, individually or in units.

To this end, the gripping members 7 are carried, individually or in units, by members, which can be displaced with respect to the base structure by means of actuator devices of any known type, controlled by an electronic controller E. The configuration and arrangement of these mobile members carrying the gripping members 7 may be of any known type.

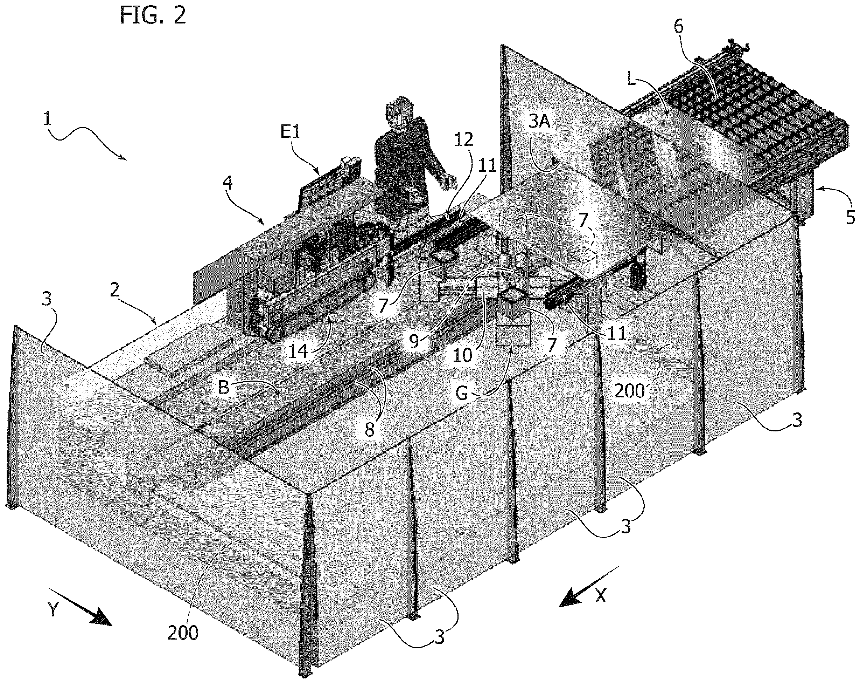

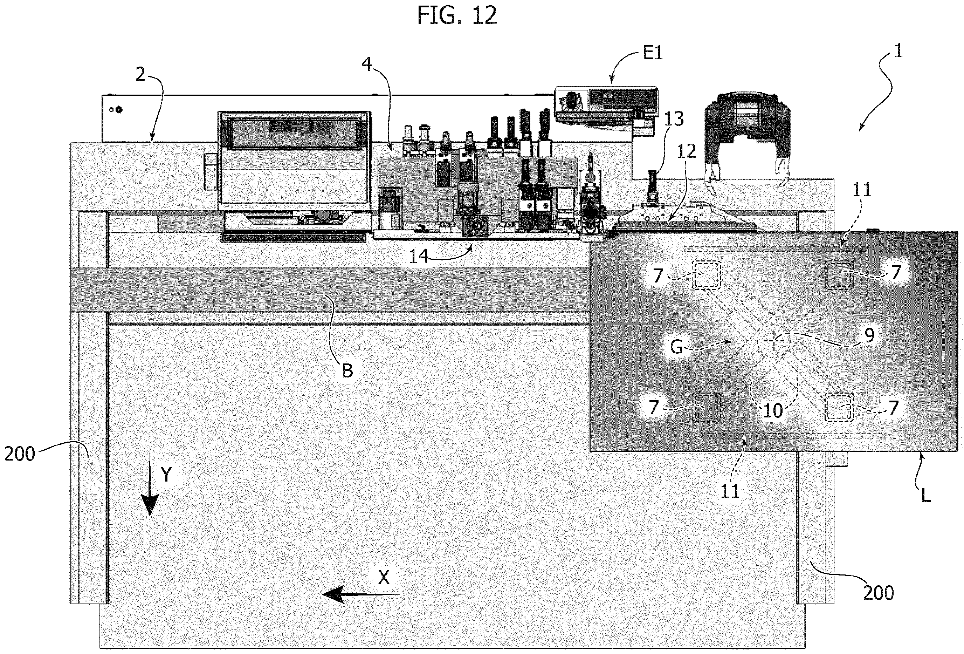

For example, Figure 10A shows a solution in which the gripping members 7 are carried in units on slides 71 (only one of which is visible in the drawing) slidably mounted along horizontal directions orthogonal to each other. The movement of each slide is controlled, for example, by an electric servomotor (not shown) by means of a screw and nut screw transmission (not shown) according to a conventional technique in the field of machine tools. Figures 1, 2 schematically show an alternative solution, in which the gripping members 7 are carried by telescopic arms 10, which can also be oriented around the vertical axis 9 (see also Figures 12, 23, 24, 28).

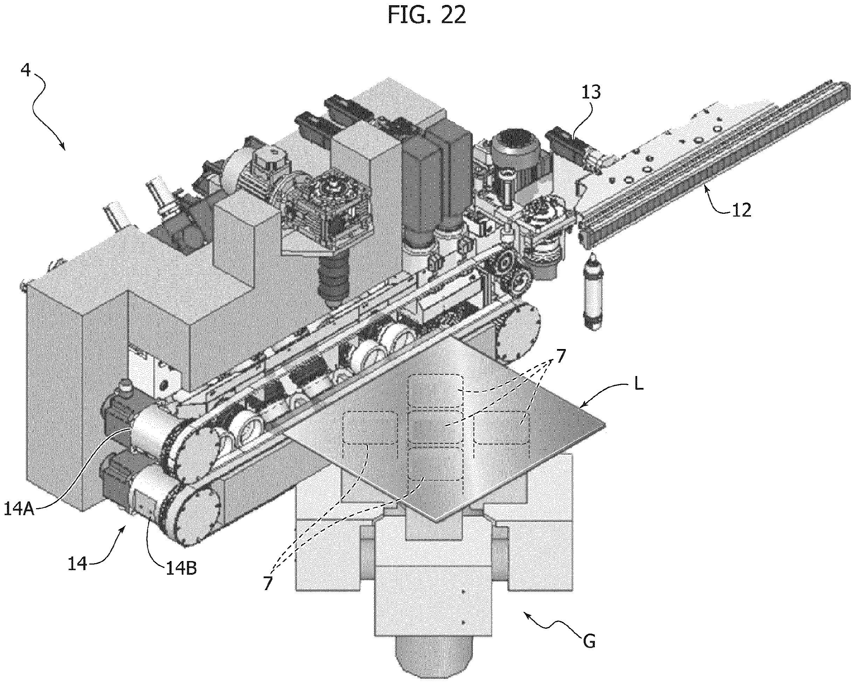

In this way, whatever the configuration of the means for adjusting their position, the gripping members 7 may be automatically adjusted in position according to the shape and size of the plate to be processed, as will also be shown below with reference to the examples illustrated in the Figures 22-28.

Therefore, the gripping unit G reconfigures itself according to the shape and size of the plate to be gripped.

The electronic controller E is configured to arrange the gripping members 7, before starting a processing cycle, according to the shape and size of the plate to be gripped, in positions suitable for ensuring that the plate is stably maintained in a horizontal position above the carriage C during the processing of the plate.

Again with reference to Figure 10A, each gripping member 7 is also vertically displaceable. In the example shown in Figure 10A, each suction cup 7 is carried by a stem 7A movable vertically with respect to a respective base support 7B.

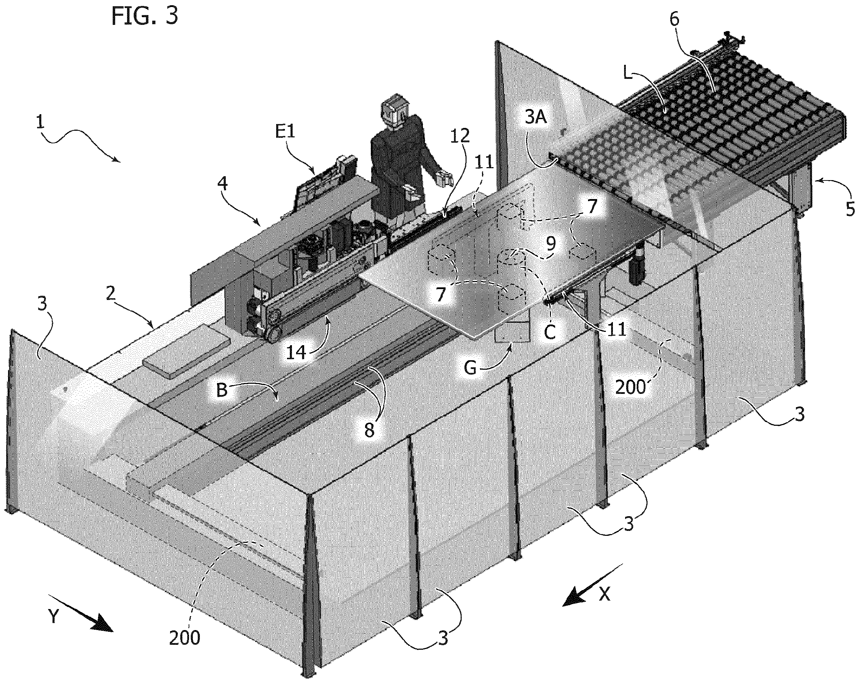

Returning to Figure 1, and to the following Figures 2, 3, a plate L that enters the work area of the machine coming from the plate loading system on the machine is received on a plate transport device, which then carries the plate above the gripping members 7, to allow them to take the plate thereon, rising vertically.

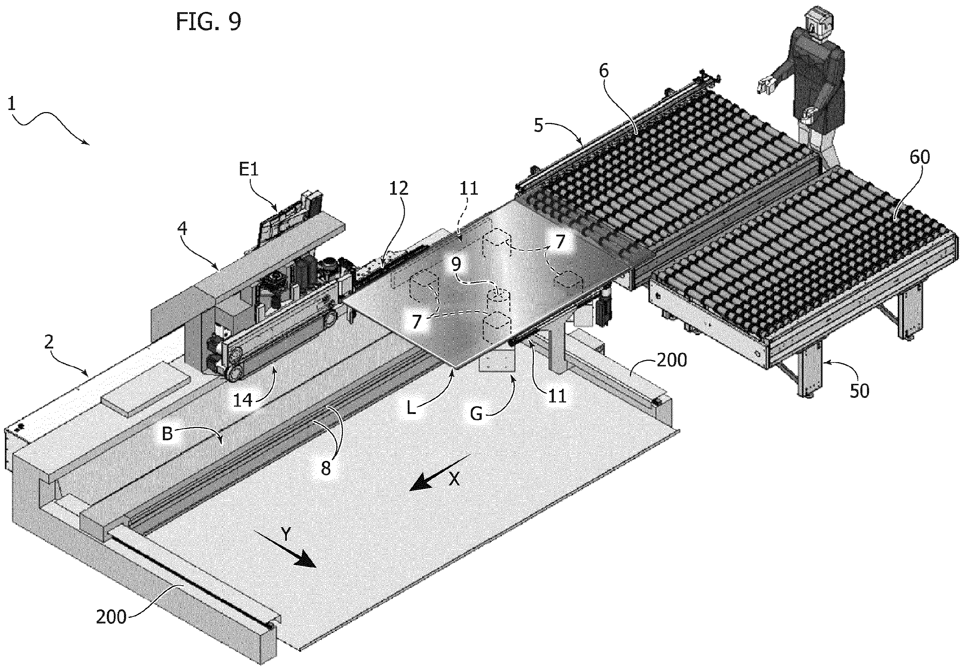

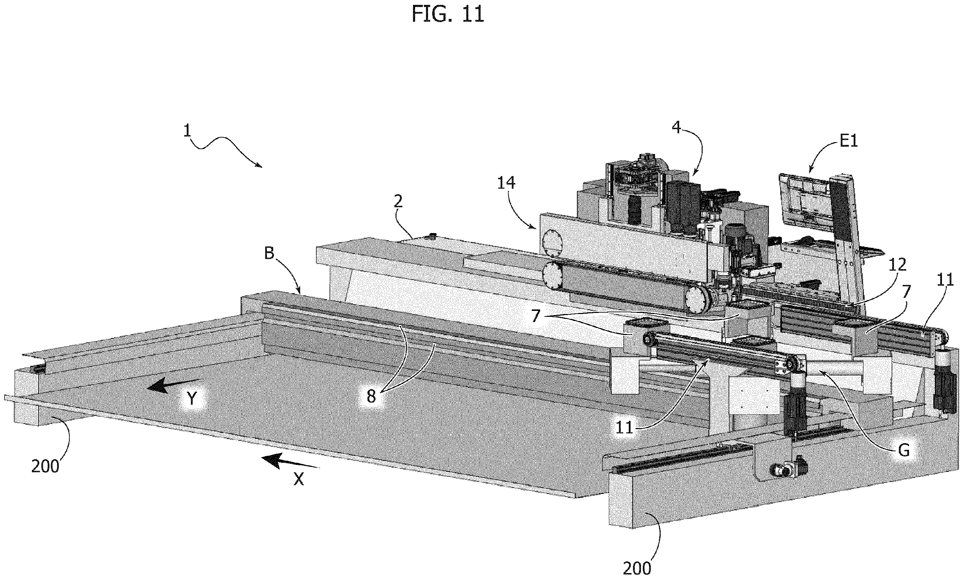

In the example illustrated here, the transport device that receives the plate L entering the machine is defined by a pair of belt conveyors 11, the reciprocal distance of which is adjustable in the transverse direction by means of an actuator device according to the size of the plate. To this end, one of the two conveyors 11 is carried by a structure sliding transversely to the direction X on a side 200 of the fixed support structure of the machine (see for example Figures 9-11).

In the embodiment illustrated here, the belt conveyors 11 have the object of advancing the plate entering the machine up to a position in which it is located in a precise position with respect to the processing unit 4 along the longitudinal direction X and along a transverse direction Y.

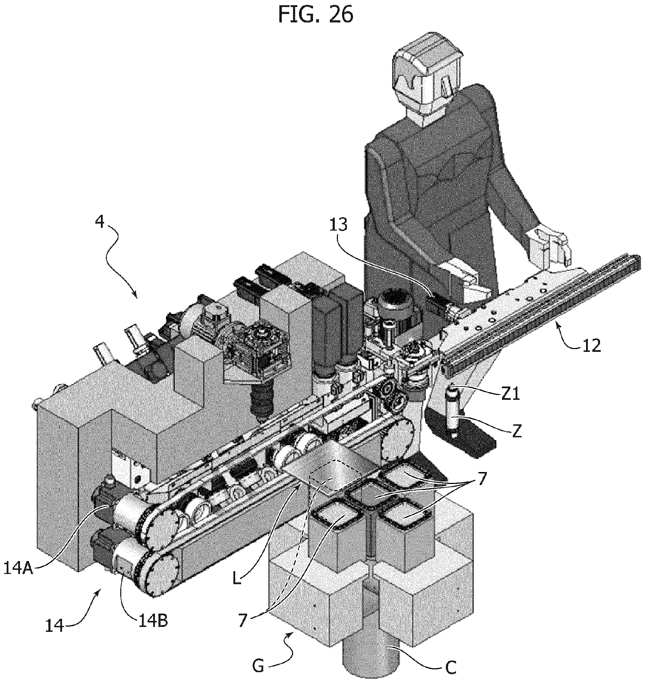

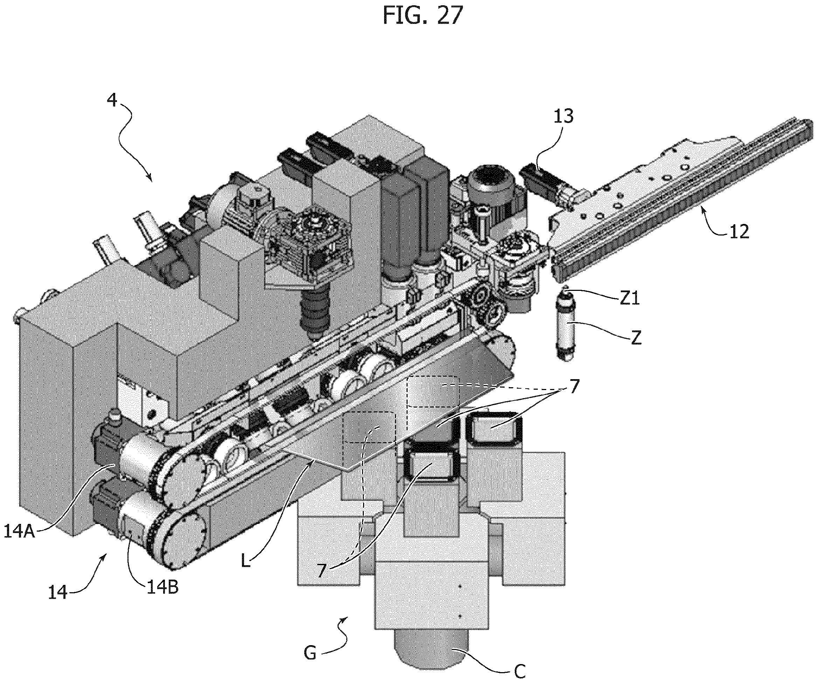

To this end, the machine comprises a disc device (indicated by Z in Figures 26 and 27), which can lift an abutment element Z1 into an operative position wherein it opposes the advancement of the plate. With the element Z1 in the raised position, the plate L entering the machine is advanced by the belt conveyors 11 until the front edge of the plate is in contact with the element Z1. In this condition, the plate is in a predetermined position with respect to the processing unit 4, along the longitudinal direction X. Furthermore, on one side of the stationary structure, the machine comprises a side support wall 12 (see, for example, Figure 12) which can be moved in the transversal direction by means of an actuator 13 so as to push the plate L in the transverse direction Y, orthogonal to the longitudinal direction X, up to a predetermined position with respect to the tools of the unit 4, corresponding to a predetermined dimension of the working depth of the tools on the edge of the plate.

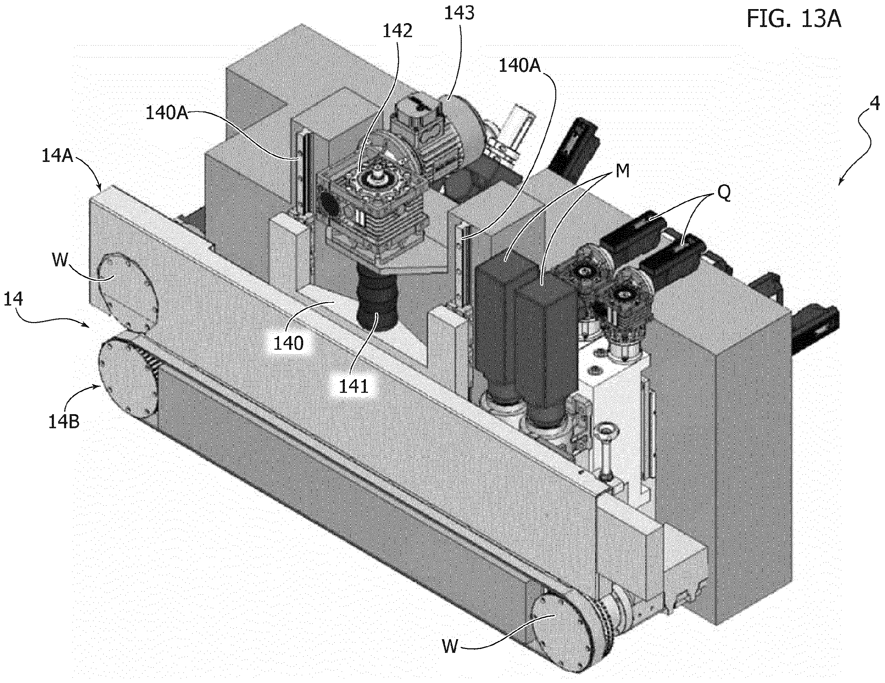

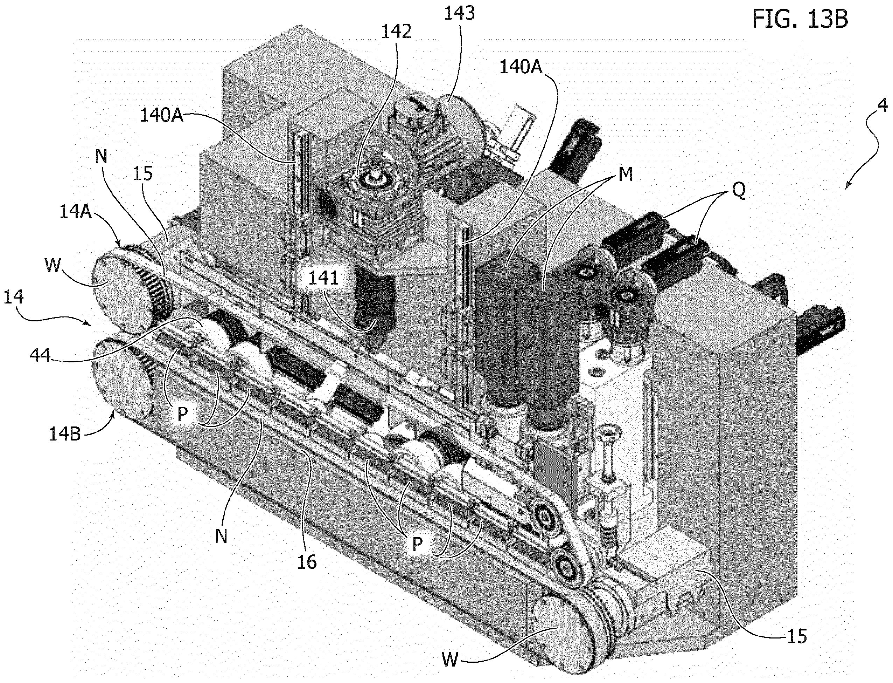

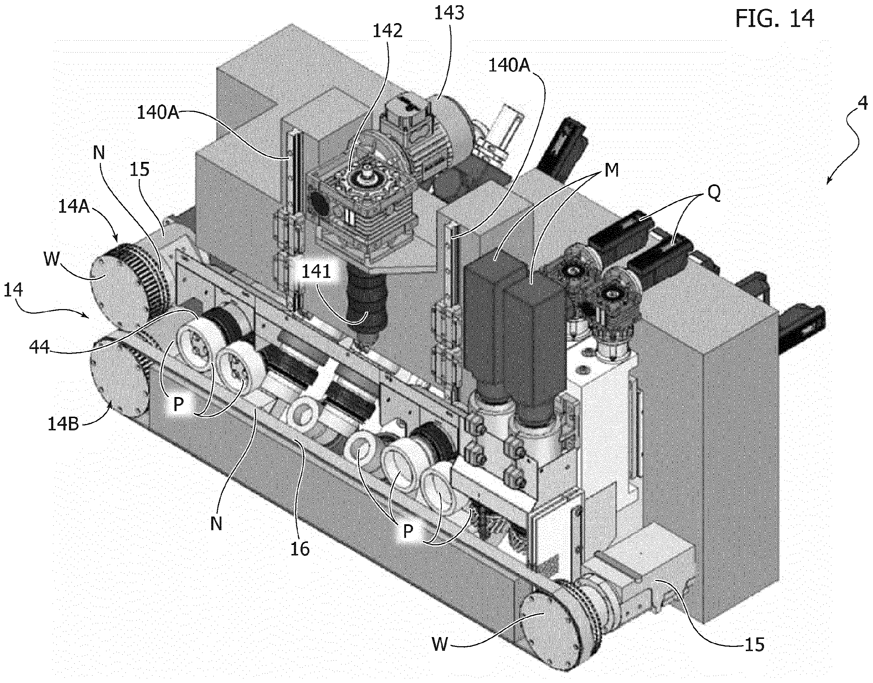

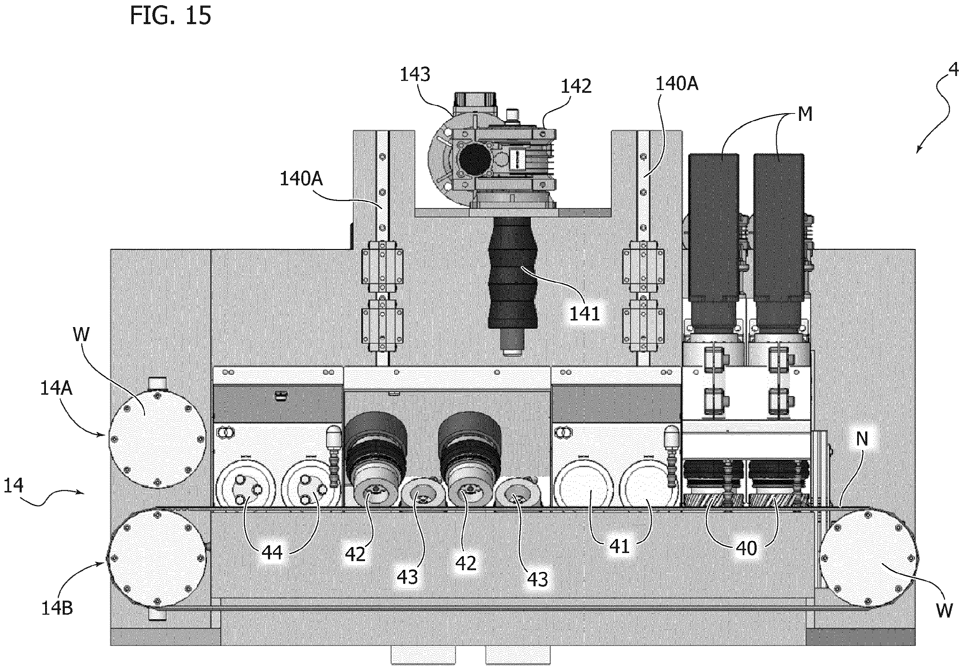

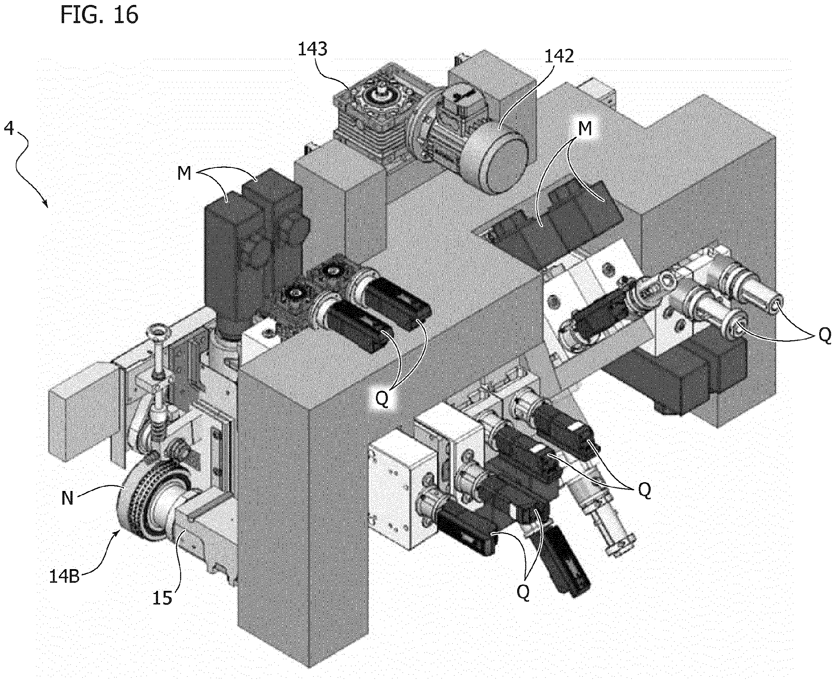

With reference to Figures 13A, 13B and 14-16, and in particular to Figure 15, they illustrate, purely by way of example, a machining unit 4 including a series of grinding tools aligned in the conveying longitudinal direction X of the plate L, intended to engage in succession a lateral edge of the plate, in order to subject each portion of the edge of the plate to a plurality of grinding operations, with a progressively increasing degree of finish.

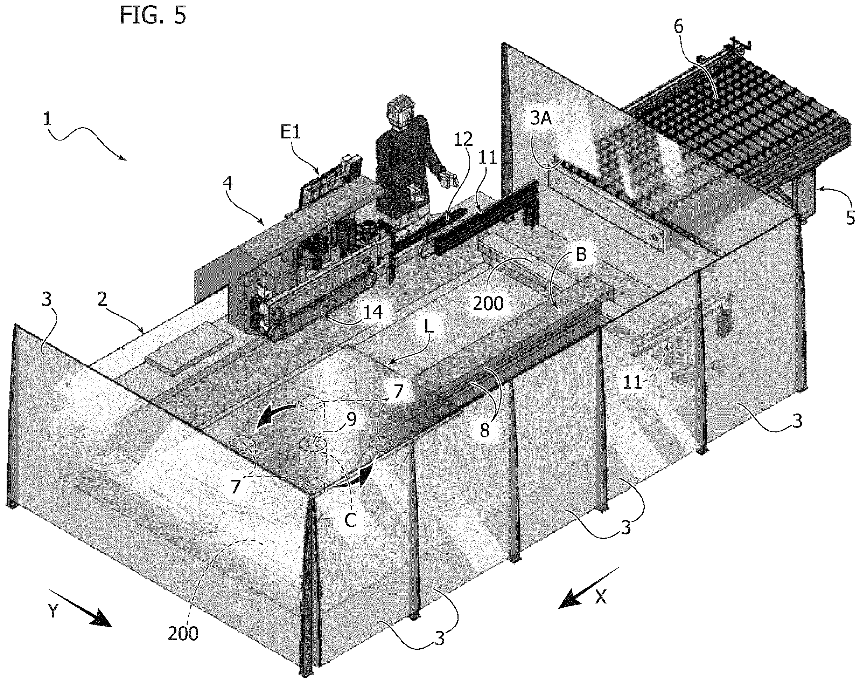

With reference in particular to Figure 5, the plate L, advancing in the conveying longitudinal direction (from right to left in the Figure) first encounters a pair of roughing wheels 40 with a vertical axis, then a pair of cup wheels 41, with a substantially horizontal axis, then two further pairs of cup wheels 42, 43, with axes inclined both with respect to the vertical direction and with respect to the horizontal direction, for a beveling operation (when this is required), respectively, of the upper and lower edges of the lateral edge of the plate, and finally a further pair of cup wheels 44, with horizontal axis.

According to the conventional technique, motor units M (only some of which are visible in the drawings) are associated with the grinding wheels 40-44, each comprising an electric motor to drive each respective grinding wheel in rotation. Furthermore, again according to the conventional technique, the position of each cup wheel along its axis and the position of the wheels 40 both with respect to the vertical direction and with respect to a direction Y transverse to the longitudinal direction X are adjustable by means of actuator units Q (only some of which are visible in the drawings) each including an electric motor and a gearbox for controlling sliding slides carrying the tool-holder units with the relative motors.

These aspects are given here purely by way of example and are not further described in detail, since they can be made in any known way and as they do not fall, taken alone, within the scope of the present invention.

The possibility of adjusting the position of the various tools allows both selection of the tools required (for example, if a beveling operation is not required, the cup wheels 42, 43 are kept in an inoperative retracted position) and adjustment of the position of the tool according to the required working depth on the item.

With reference to Figure 13A, a conveyor device 14 is associated with the machining unit 4 and is used to advance the plate L in the conveying longitudinal direction X so as to bring one of its lateral edges to engage the grinding tools in succession. The conveyor device 14 is composed of an upper belt conveyor 14A and a lower belt conveyor 14B superimposed on each other in such a way as to define parallel and facing branches between which the plate to be transported is engaged. The upper belt conveyor 14A and the lower belt conveyor 14B each comprise a belt N, preferably a toothed belt, engaged on wheels W, which are toothed wheels in the case of toothed belts. In each of the upper and lower belt conveyors 14A, 14B, one of the wheels W is driven by an electric motor 15.

The entire support structure of the upper conveyor 14A is carried by a support 140 which is slidably mounted vertically on guides 140A with respect to the stationary structure of the machine. The vertical position of the upper conveyor 14A is selected according to the thickness of the plate L to be processed. To this end, the support 140 carries a nut screw engaged by a screw 141 rotated by a motor-gearbox 143 through a transmission 142.

The upper branch of the lower belt N slides on a horizontal support surface 16 of the support structure of the conveyor device, while the lower branch of the upper belt is held against the plate by a plurality of stationary shoes P, carried by the support structure and configured to keep the lower branch of the upper belt in contact with the plate in order to maintain a constant thrust pressure coming from the upper transport branch 14A on the portion which is between the toothed profile wheels.

Once again, both the configuration of the stationary machining assembly 4, comprising the aligned series of grinding tools 40-44, and the configuration of the conveyor device 14 can vary widely with respect to the examples illustrated here.

In particular, the nature and arrangement of the grinding tools may vary, depending on the machining requirements, as well as the construction details relating to the systems for actuating the rotation of the grinding tools and the movements for adjusting the position of these tools.

Returning to Figure 1, in the specific illustrated example, the ends of the longitudinal beam B slide on sides 200 of the stationary structure 2 of the machine. Similarly to the movement of the carriage C and along the beam B, the movement of the beam B along the sides 200, in a horizontal direction Y transverse to the longitudinal direction X, can also be controlled by an electric actuator of any type known in the field, specifically by a servo-controlled electric motor, or by a pair of servo-controlled electric motors arranged on the two sides 200 of the machine, which activate the movement of the beam B by means of transmission systems of any known type (for example screw and nut screw). Again, these construction details are not illustrated here, both because they can be made in any known way, and because their elimination from the drawings makes the latter simpler and easier to understand.

Once the plate L has been loaded at the entrance to the machine, it is located in position, as illustrated above, both with respect to the longitudinal direction X and with respect to the transverse direction Y. Once this operation has been carried out, the plate is deposited on the gripping members 7 of the gripping unit G, and the gripping members 7 are activated, so as to stably grip the plate L in the aforesaid predetermined position with respect to the X and Y directions. In this condition, the members 7 refer the plate in position with respect to the vertical direction.

Once this operation has been carried out, the carriage C carrying the gripping unit G is made to advance in the conveying longitudinal direction X, in such a way that a lateral edge of the plate L engages the conveyor device 14 associated with the unit 4 of grinding tools. As already indicated above, the further advancement of the plate causes each portion of the lateral edge of the plate to subsequently engage the different tools of the machining unit 4.

The electronic controller E of the machine, with which a man-machine interface E1 is associated (Figure 1) is thus able to receive information on the position of the plate along X and along Y, and can consequently adjust the position of the grinding tools depending on the type of machining required (for example, excluding tools that are not requested) and depending on the required working depth. Advancement of the plate L along the machining unit 4 is determined by the conveyor device 14. The electronic controller, therefore, regulates the transport speed of the conveyor device 14 as a function of the processing parameters set by the user through the interface E1. At the same time, the electronic controller controls the advancement of the carriage C carrying the gripping unit G in synchronism with the advancement of the plate L determined by the conveyor device 14.The position of the gripping unit G, and consequently the position of the plate L, along the longitudinal direction X is constantly known to the electronic controller.

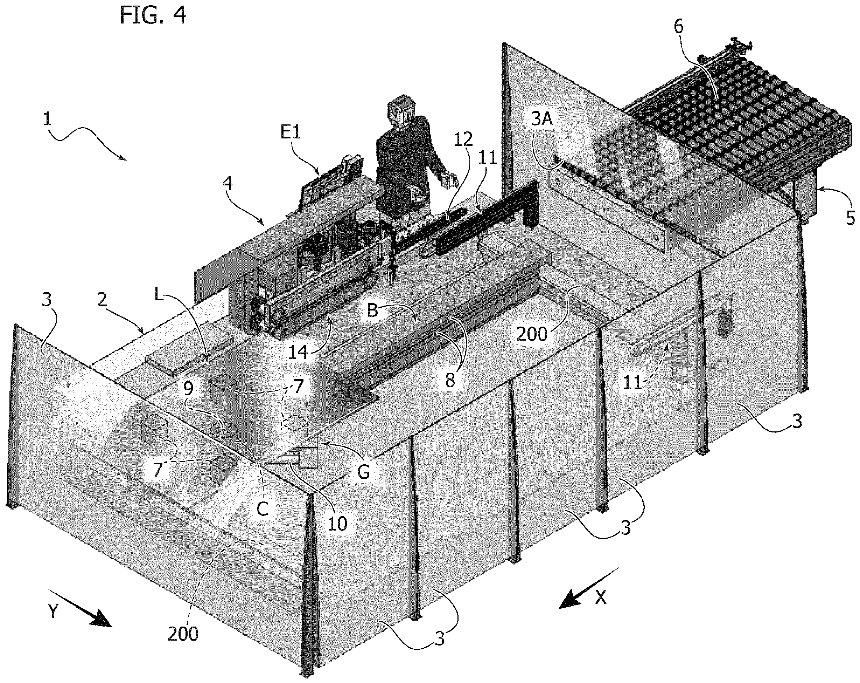

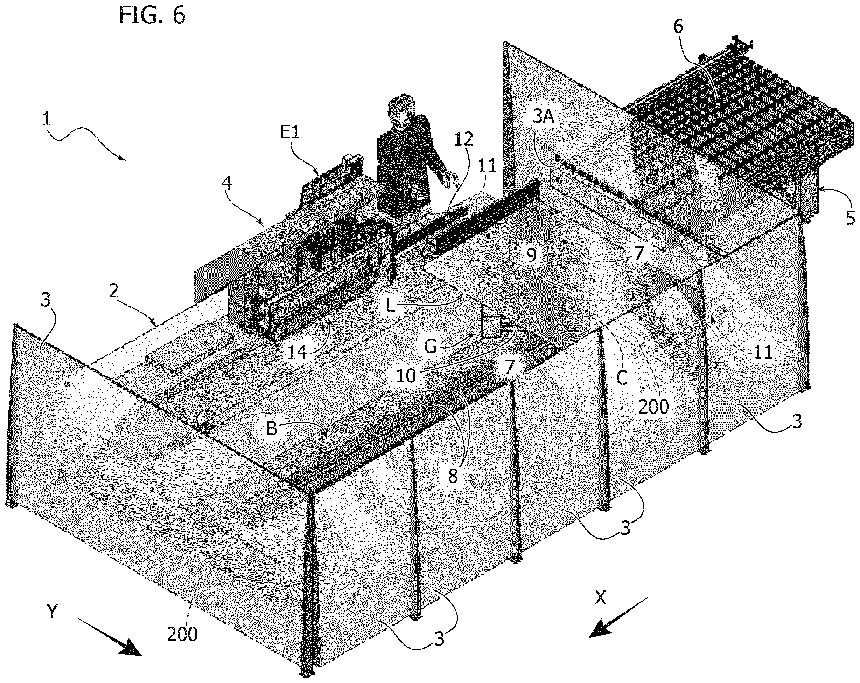

Returning to Figures 1-7 and to the example of the processing cycle illustrated therein, Figure 1 illustrates the plate L before it enters the machine, Figure 2 illustrates the plate L during the loading step into the machine, Figure 3 illustrates a subsequent step wherein the plate L has already been located in position, locked by means of the gripping unit G, and then made to advance by the conveyor device 14 and the carriage C carrying the gripping unit G along the processing unit 4, in such a way as to machine a lateral edge of the plate which is engaged in succession by the grinding tools of the machining unit 4. Figure 4 shows the plate at the end of the machining of its first edge, when the rear edge (with reference to the feed direction X) of the plate has also left the engagement with the grinding tools. Starting from this position, the beam B is moved in the Y direction by the electronic controller up to a position (Figure 5) wherein the plate L can be rotated around a vertical axis (controlling a rotation of the entire gripping unit G) without interfering with the machining unit 4. In the example shown, the plate is rotated by 90°, to allow the subsequent processing of a further edge of the plate, contiguous to the edge that has already been machined. After being rotated, the plate is brought back to a starting position at the entrance to the machine by means of a return movement of the carriage C carrying the gripping unit G along the beam B. Once the position illustrated in Figure 6 has been reached, the plate is brought back to the side of the machine carrying the machining unit 4 by means of a movement of the beam B in the Y direction.

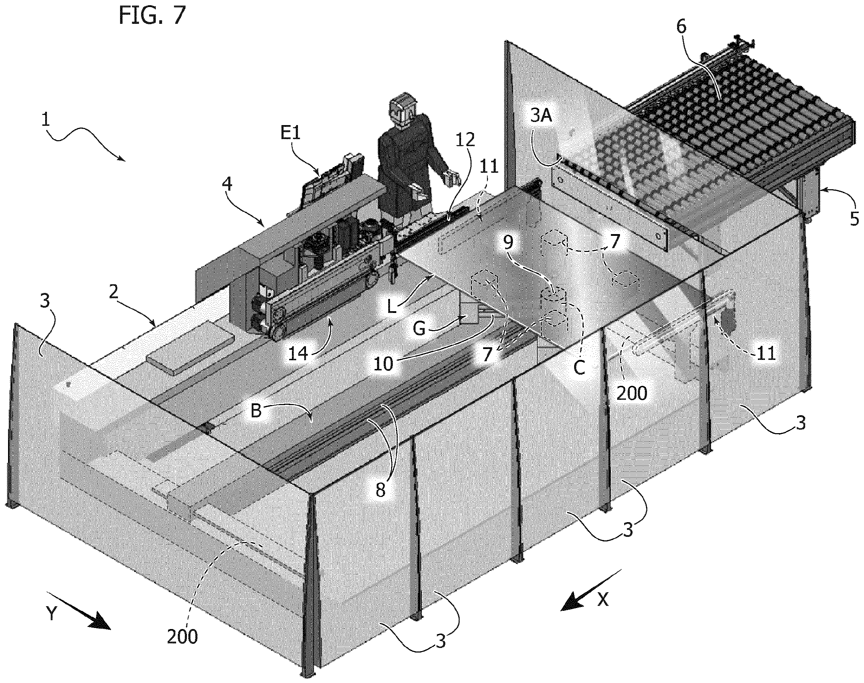

It is important to underline that, in this step, it is not necessary to repeat the operations of positioning of the plate, since after the operation carried out at the beginning of the cycle of operations, the plate always remains firmly anchored to the gripping unit G, so that the electronic controller knows precisely the position and orientation of the plate at all times, and is therefore able to control the movement of the carriage C and the beam B in order to bring the plate back exactly to a required starting position. Starting from the position reached in Figure 7, the cycle can be repeated by making the plate L advance again by means of the conveyor device 14 of the machining unit 4 and by means of the carriage C carrying the gripping unit G, so as to subject a second edge of the plate to processing. At the end of the processing of each edge, the operations described above can be repeated, until the processing of all the edges of the plate is completed, if required.

It is important to note that an advantage of the arrangement described above lies in the fact that the electronic controller can orient the plate to ensure that with the subsequent processing of the edges not only a required finishing processing of the edges is obtained, with possible bevel processing, but also a squaring of the plate, and/or its shaping is carried out, according to a required configuration, with the possibility of returning, if necessary, the plate to nominal project dimensions, eliminating any irregularities in shape deriving from defects in the processing to which the plate has been subjected previously.

Again with reference to the embodiment illustrated in Figures 1-7, it should be emphasized that the embodiment is provided here purely by way of example. In particular, the configuration of the elements of the machine that allow the gripping unit G to be moved both in the longitudinal direction X, and in the transverse direction Y, can widely vary with respect to what has been described. For example, the carriage C carrying the gripping unit G could be slidably mounted in the transverse direction Y on a beam oriented parallel to the Y direction and slidably mounted on the stationary structure of the machine in the longitudinal direction X.

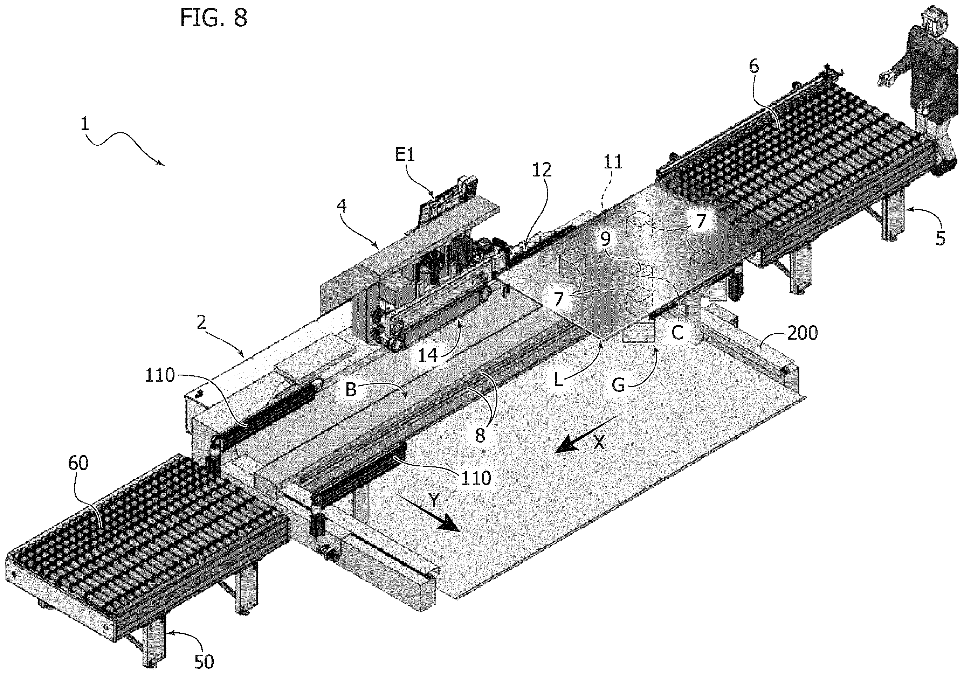

The machine according to the invention is also suitable for use in line, providing a plate inlet upstream of the machine and a plate outlet downstream of the machine (for example, with a table 50 having a roller plane 60 - Figure 8 ) or it can be used as a stand-alone machine, in which case it could also be possible to provide a plate outlet at the same upstream end of the machine (see Figure 9), for example, with a table 50 for unloading the plate, side by side to the table 5 that receives the plate entering the machine, and having a roller plane 60. Again, these details are just an example, since the machine can be equipped with any type of device for loading and unloading the plate in a manual or automatic mode.

Auxiliary machining devices can be associated with the machining unit 4, to carry out further machining of the plate, upstream or downstream of the grinding tools 40-44.

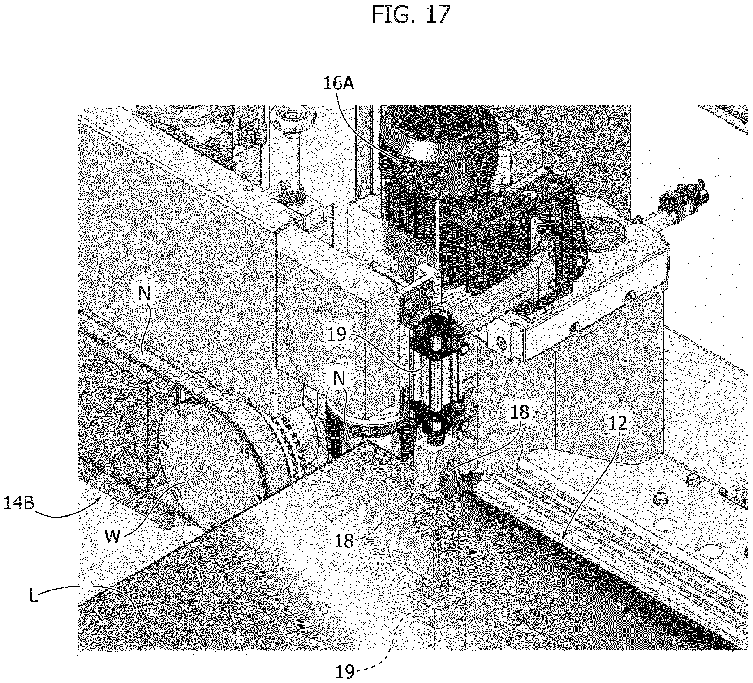

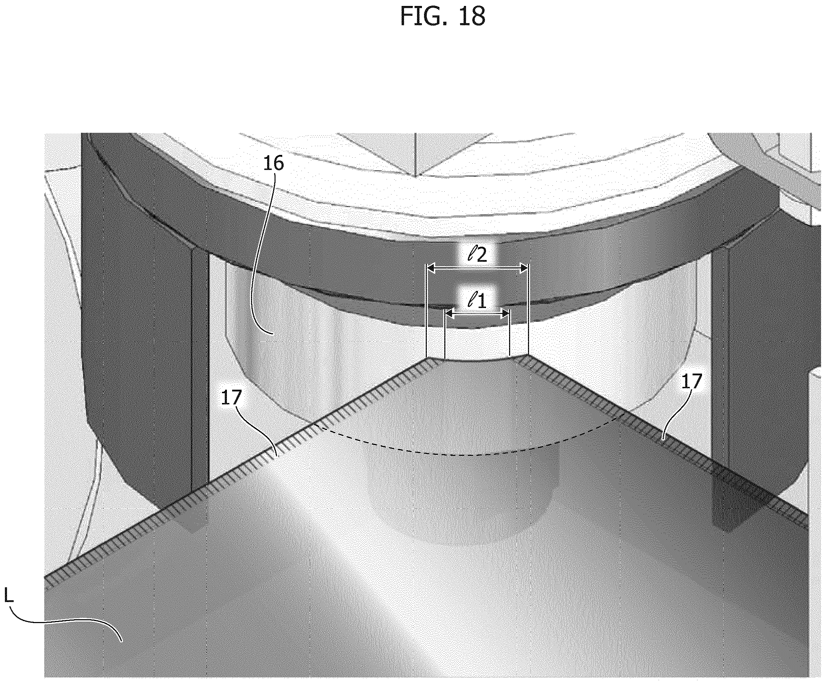

For example, with reference to Figures 17, 18, a grinding wheel 16 rotating around a vertical axis, driven by an electric motor 16A to perform a chamfer at a corner of the plate, can be provided at the inlet of the machining unit 4. Figure 18 illustrates - on an enlarged scale - the detail of the grinding wheel 16 during machining. It must be considered that the thicknesses of material indicated with 17 in Figure 18 are intended to be removed by the subsequent processing of the edges of the plate. Therefore, the residual portion of the chamfer performed by the grinding wheel 16 has a width I₁ less than the width I₂ of the chamfer obtained at the beginning of the machining. The diameter of the grinding wheel 16 is chosen in such a way that the residual portion of chamfer, having a width I₁, approximates a flat surface.

With reference to Figure 17, the reference numbers 18 indicate freely rotatable, wheels which are pushed against the plate by two pneumatic or electric actuators 19 in order to limit or completely eliminate any vibrations of the plate L during processing.

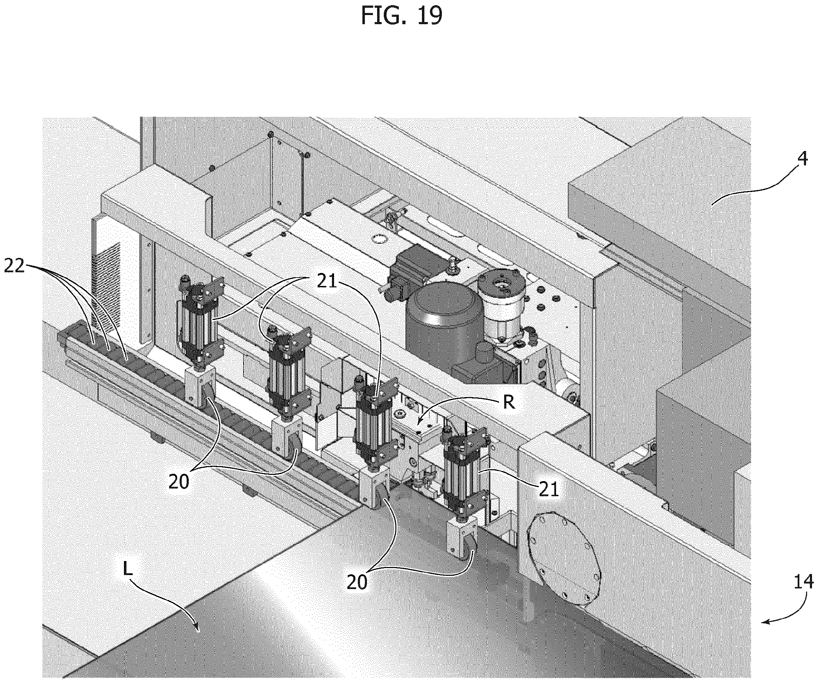

Figures 19-21 illustrate an example of a so-called "radiusing" device, arranged downstream of the machining unit 4, intended to operate as an alternative to the chamfering device constituted by the grinding wheel 16, to impart a curved profile to a vertex of the plate, or rather "rounded".

Also in this case, freely rotatable wheels 20 are provided, pushed by respective electric actuators 21 against the upper face of the plate, to limit or completely eliminate any vibrations of the plate L during processing. In this case, the lower face of the plate instead rests on a longitudinally aligned series of freely rotatable rollers 22, carried by the support structure of the machining unit.

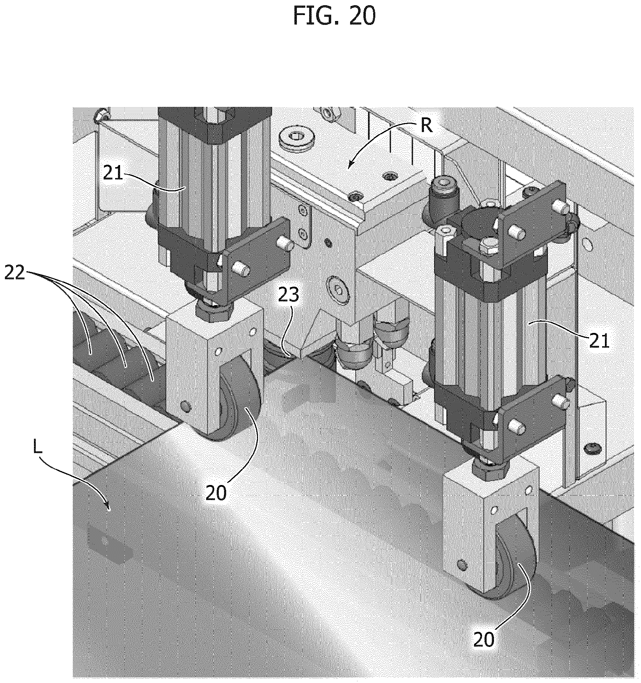

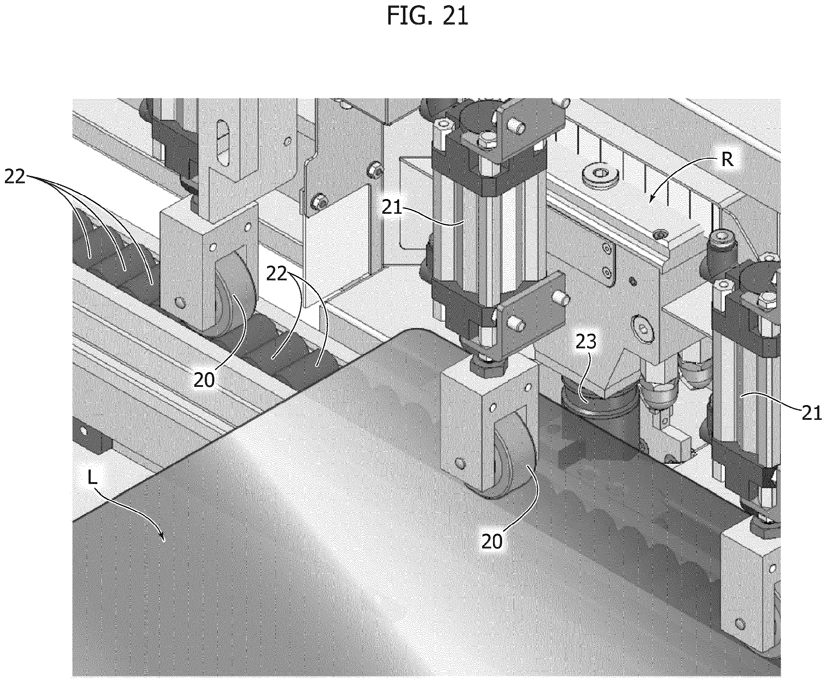

With reference in particular to Figures 20, 21, the radiusing device R is preferably made in accordance with the disclosure of European patent EP 3 012 066 B1 by the same Applicant. According to this solution, a grinding wheel 23 rotating around a vertical axis is carried by an apparatus that includes a base plate, which is moved in the conveying longitudinal direction X in synchronism with the advancement of the plate L, and electronically-controlled actuators to move the grinding wheel, during its rotation, both in the X direction and in the Y direction with respect to said base plate. In this way, the device is capable of imparting any required curved profile to a vertex of the plate, during advancement of the plate. Figure 20 shows the grinding wheel 23 during processing, while Figure 21 shows the grinding wheel 23 after completion of the processing, when the plate L has already advanced further (the rounded corner V is visible).

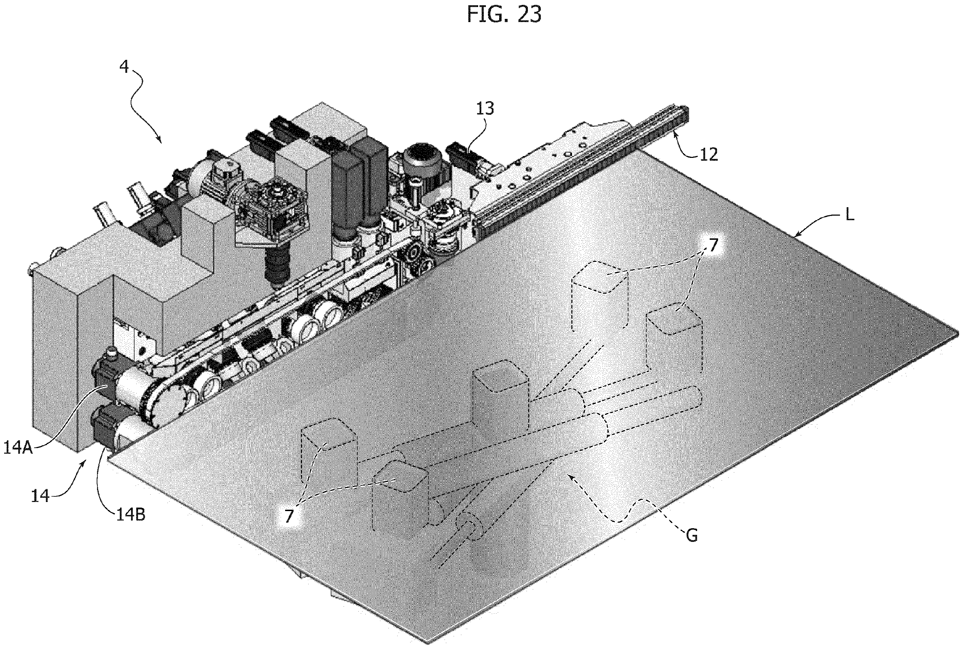

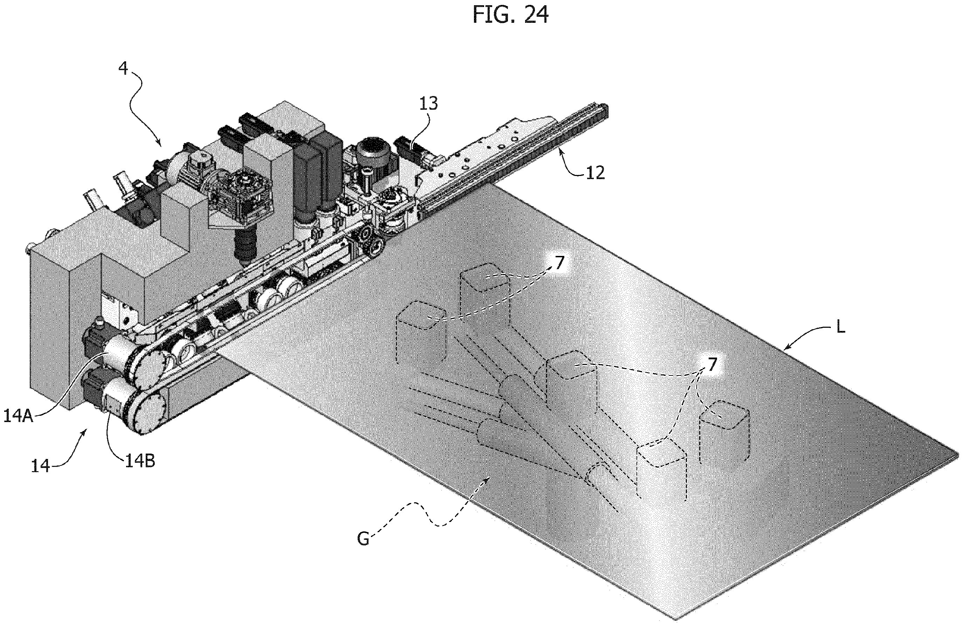

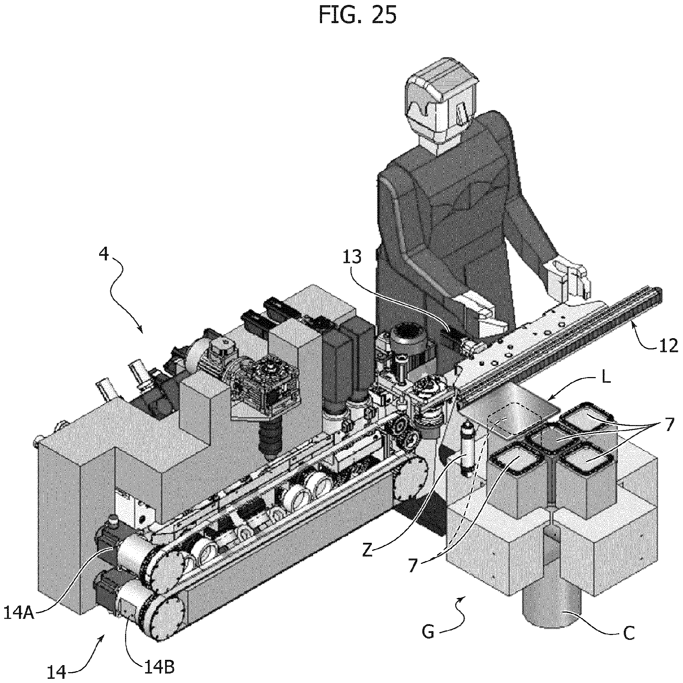

As already discussed above, one of the advantages of the machine according to the invention lies in the fact that the gripping unit G of the plate can be reconfigured in a completely automatic way, depending on the size and shape of the plate. Figures 22-28 show different examples of use of the machine according to the invention with different plate shapes and sizes. Figure 22 shows the application to a square-shaped plate of relatively small dimensions, which requires arranging the gripping members 7 in the position of maximum mutual proximity. Figures 23, 24 show two successive steps of the manufacturing cycle of a large rectangular plate. Figure 23 shows an operation step wherein the machine is processing a long side of the plate, while Figure 24 shows the operation step of the machine during processing of a short side of the plate. Figure 25 shows the use of the machine with an extremely small square item, which can be loaded manually by an operator using only one of the gripping members 7. Figure 26 shows the step in which the item is brought to the machining unit.

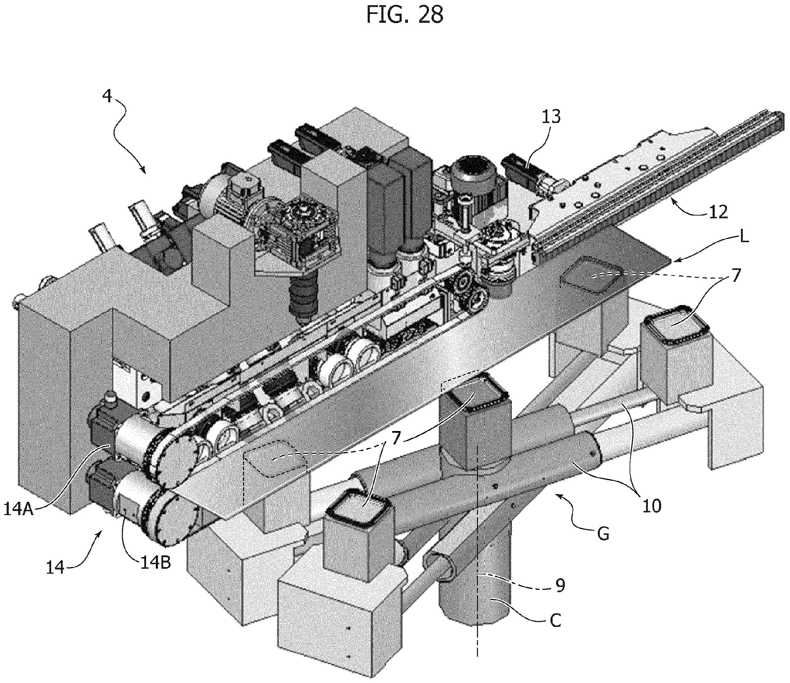

Figures 27, 28 show examples of application on long plates with a reduced transverse dimension, which can be locked on the gripping unit G using only two of the gripping members 7.

In general, the fully automatic operating mode which has been described with reference to Figures 1-7 is possible with relatively large plates. For relatively small dimensions it is necessary to use semi-automatic and manual modes. In the case of semi-automatic modes, the operator, in addition to positioning the item at the beginning of the processing cycle, will have to rotate the item only once during the execution of the lateral edges of the plate, while for the manual mode, the operator will have to rotate the plate for all the edges to be processed, without moving from the loading station.

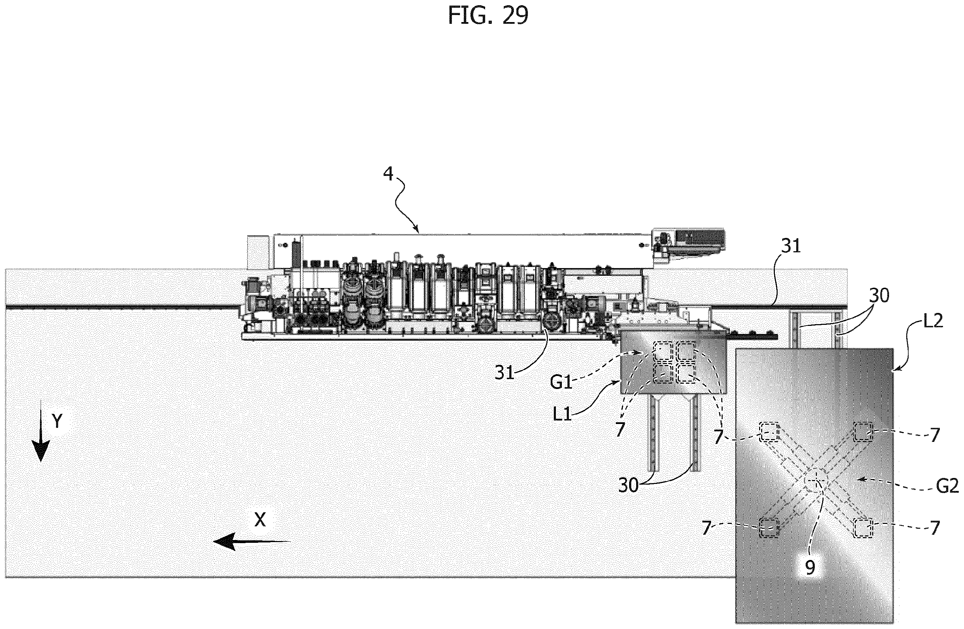

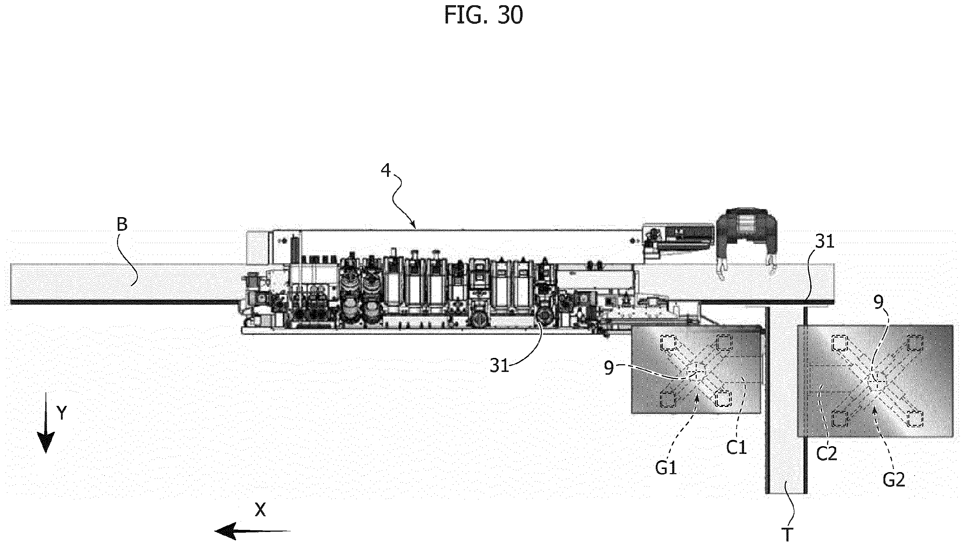

Figures 29, 30 are plan views of further variants of the machine which refer to examples of implementations of the machine aimed at allowing the processing of several plates (in the example two plates L1, L2) immediately one after the other. To this end, the machine may be provided with two gripping units G1, G2 associated with two respective carriages C1, C2. In the example of Figure 29, each of the carriages C1, C2 is carried by a carriage movable in the Y direction on guides 30 which are - in turn - movable in the X direction on guides 31.

Figure 30 illustrates a variant wherein the two gripping systems G1 and G2 are carried by respective carriages C1, C2 slidably mounted on opposite sides of a common transverse beam T which is - in turn - slidably mounted in the X direction on a longitudinal beam B of the machine.

As will be understood, these solutions are only some examples of the embodiments of the invention. With solutions of the type illustrated in Figures 29, 30, it is possible to process two plates one immediately after the other. Of course, the systems can also be modified according to the needs of each specific application. Theoretically, it would also be possible to provide more than two gripping units G moving independently of each other (as in Figure 29), or moving only partially independently of each other, as in Figure 30, in order to perform the processing of three or more plates in rapid succession.

Of course, without prejudice to the principle of the invention, the details of construction and the embodiments may vary widely with respect to those described and illustrated purely by way of example, without departing from the scope of the present invention, as defined by the attached claims.

For example, the gripping members 7, in the specific case illustrated - the gripping suction cups - may, if necessary, be made with specific shapes depending on the product to be processed and/or with different sizes and shapes.

The carriage carrying the gripping unit G may be equipped with abutment members that are automatically activated on the side(s) opposite to the processing side to counteract forces exerted by the tools during processing,

One of the gripping members may be equipped with abutment members and adjusters to allow automatically positioning and centering in the case of processing of plates of relatively reduced dimensions,

Downstream and/or upstream of the unit 4 of the machining tools, auxiliary units can be positioned, on one or more sides of the product, for cutting (with different angles).

Downstream and/or upstream of unit 4 of the machining tools, auxiliary units can be positioned for surface processing (such as removal of the coating for glass, removal of mesh for ceramic products, cleaning and/or bush hammering for natural stones, synthetics and ceramics).

## Claims

1. A machine for processing lateral edges of glass plates, plates of stone material or plates of synthetic material, the machine comprising:
- a stationary support structure (2),
- a group (G) of plate gripping members (7), configured to hold a plate (L) in a horizontal position during the plate processing,
- wherein the group (G) of plate gripping members (7) is carried by a carriage (C) movable at least in a plate conveying longitudinal direction (X),
- a stationary machining unit (4) for machining a lateral edge of the plate (L), the unit being carried by said stationary supporting structure (2) and including a series of grinding tools (40-44) aligned along the conveying longitudinal direction (X), in such a way as to engage in succession a lateral edge of a plate (L) that advances along said conveying longitudinal direction (X),
- wherein with said carriage (C) carrying the group (G) of plate gripping members (7), an electronically-controlled actuator device is associated, configured to move the carriage (C) along said conveying longitudinal direction (X),
said machine being **characterized in that** the plate gripping members (7) are adjustable in position with respect to the carriage (C), and relative to each other by means of electronically-controlled actuator devices, and **in that** the machine comprises an electronic controller (E) configured to adjust the position of the gripping members before processing the plate, as a function of the size and/or shape of the plate (L), so as to arrange the gripping members so as to ensure that the plate is firmly locked in a horizontal position on the carriage (C) during processing of the plate, and
**in that** the group (G) of plate gripping members (7) is rotatably supported by the carriage (C) around a vertical axis (9), and is configured to be oriented around this vertical axis (9) by means of an electronically-controlled actuator device,
in such a way that after processing of a lateral edge of a plate (L), the plate (L) can be brought to a position out of interference with the grinding tools (40-44) of the stationary machining unit (4), and can then be rotated around said vertical axis (9) and returned to a starting position with respect to the stationary machining unit (4), for subsequent processing of another lateral edge of the plate (L) by means of said grinding tools (40-44) of the stationary machining unit (4).

2. A machine according to claim 1, **characterized in that** the carriage (C) carrying the group of plate gripping members (7) can also be moved by an electronically-controlled actuator device in a transverse horizontal direction (Y), orthogonal to said conveying longitudinal direction (X), so that after processing of a lateral edge of the plate (L), the plate can be moved transversely with respect to the conveying longitudinal direction (X) to a position in which it can be rotated around said vertical axis (9) without interfering with said stationary machining unit (4), after which the plate (L) can be brought back to said starting position to start processing of another edge of the plate (L).

3. A machine according to claim 2, **characterized in that** said carriage (C) carrying the group (G) of plate gripping members (7) is movable in the conveying longitudinal direction (X) along a longitudinal beam (B), which has opposite ends slidably mounted on the stationary structure (2) of the machine (1) in said transverse direction (Y), orthogonal to the conveying longitudinal direction (X) of the beam (B).

4. A machine according to claim 1, **characterized in that** a conveyor device (14) is associated with said stationary machining unit (4) to advance a plate (L) along said conveying longitudinal direction (X), so that a lateral edge of the plate (L) engages the grinding tools (40-44) of said stationary machining unit (4) in succession, said device for actuating the longitudinal movement of the carriage (C) carrying the group (G) of plate gripping members (7) being controlled in such a way as to move the group of plate gripping members (7) in synchronism with said conveyor device (14).

5. A machine according to claim 4, **characterized in that** the conveyor device (14) comprises an upper belt conveyor (14A) and a lower belt conveyor (14B) positioned and configured to receive a plate (L) therebetween in such a way as to advance the plate in the conveying longitudinal direction (X).

6. A machine according to claim 1, **characterized in that** the carriage (C) carries the group of plate gripping members (7), individually or in groups, in positions that are adjustable in the transverse horizontal direction (Y) and in the conveying longitudinal direction (X) by means of electronically-controlled actuator devices (10).

7. A machine according to claim 6, **characterized in that** each gripping member (7) can be moved vertically.

8. A machine according to claim 1, **characterized in that** it comprises a plate (L) positioning system, for locating the plate in position with respect to the stationary machining unit (4) along the conveying longitudinal direction (X) and along the transverse horizontal direction (Y), at the beginning of a machining cycle, before locking the plate on said group (G) of plate gripping members (7), the gripping members then locating the plate in position with respect to the vertical direction, and
**in that** after processing of a first lateral edge of the plate, the group of gripping members (7) is always kept engaged on the plate until processing of all the lateral edges of the plate that are to be machined has been completed, so that the operation for locating the plate in position does not have to be repeated before processing another lateral edge of the plate.

9. A machine according to claim 8, **characterized in that** said plate positioning system comprises an abutment element (Z1), which can be temporarily positioned in a raised position in which it can be engaged by a front edge of a plate (L) to be machined, so as to locate the plate (L) in position with respect to the conveying longitudinal direction (X).

10. A machine according to claim 9, **characterized in that** the plate positioning system further comprises a side wall (12) for abutment against the plate, which can be moved by an actuator device (13) in the transverse horizontal (Y) orthogonal to said conveying longitudinal direction (X), to transversely push a plate (L) to be machined up to a predetermined transverse position with respect to the grinding tools (40-44) of said stationary machining unit (4).

11. A machine according to claim 1, **characterized in that** it comprises a plate loading section with a plate conveying system (11), configured to receive a plate to be machined and to bring it above the group (G) of plate gripping members (7).

12. A machine according to claim 1, **characterized in that** upstream and/or downstream of said series of grinding tools (40-44), a chamfering device (16) and/or a radiusing device (R) are provided to make a chamfer and/or a curved profile on a corner (V) of the plate (L).

13. A machine according to claim 1, **characterized in that** it comprises two or more carriages (C1, C2) carrying respective units of gripping members (G1, G2) to grip respective plates (L1, L2) to be machined, each carriage (C1, C2) being displaceable both in said conveying longitudinal direction (X) and in said transverse horizontal direction (Y) orthogonal to the conveying longitudinal direction (X), by means of respective electronically-controlled actuator devices.

14. A machine according to claim 1, **characterized in that** it comprises any one of the following further characteristics:
- the gripping members (7) have shapes selected according to the shape and size of the plate to be machined and/or have different sizes or shapes from each other,
- the carriage (C) carrying the group (G) of gripping members is equipped with abutment members that are automatically activated on the side(s) opposite to the processing side to counteract forces exerted by the tools during processing,
- one of the gripping members (7) is equipped with abutment members for automatically positioning and centering plates of relatively reduced dimensions,
- downstream and/or upstream of the stationary machining unit (4) auxiliary units are positioned to perform a cutting operation, at different angles, on one or more sides of the plate,
- downstream and/or upstream of the stationary machining unit (4), auxiliary units are positioned for surface machining of the plate.

15. A method for processing lateral edges of glass plates, plates of stone material or plates of synthetic material, comprising:
- providing a group (G) of plate gripping members (7), configured to hold a plate (L) in a horizontal position during processing of the plate,
- advancing said group (G) of plate gripping members (7) in a conveying longitudinal direction (X) of the plate, in such a way as to bring a lateral edge of the plate (L) to engage in succession a series of grinding tools (40-44) forming part of a stationary machining unit (4), and aligned in said conveying longitudinal direction (X) of the plate,
said method being **characterized in that** the said plate gripping members (7) are carried by a carriage (C) movable in said conveying longitudinal direction (X), in such a way that the gripping members are adjustable in position, by means of electronically-controlled actuator devices, with respect to the carriage (C) and relative to each other, and
**in that** before the start of a plate processing cycle, said plate gripping members (L) are adjusted in position by said electronically-controlled actuator devices as a function of the size and/or shape of the plate (L), so as to arrange the gripping members in such positions as to ensure that the plate is firmly locked in a horizontal position on the carriage (C) during processing of the plate, and
**in that** said carriage (C) carrying the group (G) of plate gripping members (7) rotatably supports said group around a vertical axis (9), and is provided with an electronically-controlled actuator device for controlling the rotation of said group (G) around said vertical axis (9), and wherein after processing of a lateral edge of a plate (L) the plate is brought to a position out of interference with the grinding tools (40-44) of the stationary machining unit (4), and is rotated around said vertical axis (9) to be then brought back to a starting position for subsequent processing of another edge of the plate (L) by said grinding tools (40-44) of the stationary machining unit (4).

16. A method according to claim 15, **characterized in that** the carriage (C) carrying the group of plate (L) gripping members can also be moved by an electronically-controlled actuator device in a horizontal transversal direction (Y), orthogonal to said conveying longitudinal direction (X) and wherein after processing a lateral edge of the plate (L), the plate is displaced in the transverse direction (Y) orthogonal to the conveying longitudinal direction (X) to a position wherein it is rotated around said vertical axis (9) without interfering with said stationary unit of tools (4), after which the plate (L) is brought back to said starting position to start the processing of another edge of the plate.

17. A method according to claim 15, **characterized in that** with the stationary machining unit (4) there is associated a conveyor device (14), which advances a plate (L) along the plate conveying longitudinal direction (X) in such a way that a lateral edge of the plate (L) engages in succession the grinding tools (40-44) of said stationary machining unit (4), while the device for actuating the longitudinal movement of the group (G) of plate gripping members (7) is controlled in such a way as to move the group (G) of gripping members (7) in synchronism with said conveyor device (14).

18. A method according to claim 15, **characterized in that** at the beginning of a machining cycle of a plate (L) the plate is located in position relative to the stationary machining unit (4) along the longitudinal direction (X) and along the transversal direction (Y), after which the plate is gripped by said group (G) of plate gripping members (7), which locate the plate in position with respect to the vertical direction orthogonal to the plate, and
**in that** the plate, after processing of a first lateral edge of the plate, always remains engaged by said group of gripping members (7) until the processing of all the lateral edges of the plate that are to be machined is completed, so that the operation for locating the plate in position does not have to be repeated before processing another lateral edge of the plate.

19. A method according to claim 15, **characterized in that** before or after the grinding of a lateral edge of the plate, at least one corner (W) of the plate is subjected to a process to form a chamfer or a curved profile at the corner.

20. A method according to claim 15, **characterized in that** two or more carriages (C1, C2) are arranged, carrying respective groups of plate gripping members (G1, G2), which receive respective plates (L1, L2) that are caused to advance one after the other with respect to said stationary machining unit (4) to process a lateral edge of each plate.

## Patentansprüche

1. Maschine zur Bearbeitung von Seitenkanten von Glasplatten, Platten aus Steinmaterial oder Platten aus synthetischem Material, wobei die Maschine umfasst:
- eine stationäre Tragestruktur (2),
- eine Gruppe (G) von Plattengreifelementen (7), die ausgebildet sind, eine Platte (L) in einer horizontalen Position während der Plattenbearbeitung zu halten,
- wobei die Gruppe (G) von Plattengreifelementen (7) von einem Schlitten (C) getragen wird, der zumindest in einer Plattenförderlängsrichtung (X) bewegbar ist,
- eine stationäre Bearbeitungseinheit (4) zur maschinellen Bearbeitung einer Seitenkante der Platte (L), wobei die Einheit von der stationären Tragestruktur (2) getragen wird und eine Reihe von Schleifwerkzeugen (40-44) umfasst, die entlang der Förderlängsrichtung (X) ausgerichtet sind, derart, dass diese nacheinander in eine Seitenkante einer Platte (L) eingreifen, die sich entlang der Förderlängsrichtung (X) bewegt,
- wobei zu dem Schlitten (C), der die Gruppe (G) von Plattengreifelementen (7) trägt, eine elektronisch gesteuerte Betätigungsvorrichtung zugeordnet ist, die ausgebildet ist, den Schlitten (C) entlang der Förderlängsrichtung (X) zu bewegen,
wobei die Maschine **dadurch gekennzeichnet ist, dass** die Plattengreifelemente (7) in Position bezüglich des Schlittens (C) und relativ zueinander mittels elektronisch gesteuerter Betätigungsvorrichtungen einstellbar sind, und dass die Maschine eine elektronische Steuerung (E) umfasst, die ausgebildet ist, die Position der Greifelemente vor Bearbeitung der Platte in Abhängigkeit von der Größe und/oder Form der Platte (L) anzupassen, um die Greifelemente so anzuordnen, dass sichergestellt wird, dass die Platte in einer horizontalen Position auf dem Schlitten (C) während der Bearbeitung der Platte fest verriegelt ist, und
dass die Gruppe (G) von Plattengreifelementen (7) durch den Schlitten (C) drehbar um eine vertikale Achse (9) getragen ist und ausgebildet ist, durch eine elektronisch gesteuerte Stellvorrichtung um diese vertikale Achse (9) ausgerichtet zu werden,
derart, dass nach Bearbeitung einer Seitenkante einer Platte (L) die Platte (L) in eine Position bringbar ist, die außer Eingriff der Schleifwerkzeuge (40-44) der stationären Bearbeitungseinheit (4) ist, und dann um die vertikale Achse (9) drehbar ist und in eine Ausgangsposition bezüglich der stationären Bearbeitungseinheit (4) für eine anschließende Bearbeitung einer anderen Kante der Platte (L) durch die Schleifwerkzeuge (40-44) der stationären Bearbeitungseinheit (4) zurückbringbar ist.

2. Maschine nach Anspruch 1, **dadurch gekennzeichnet, dass** der Schlitten (C), der die Gruppe von Plattengreifelementen (7) trägt, auch durch eine elektronisch gesteuerte Betätigungsvorrichtung in einer horizontalen Querrichtung (Y) orthogonal zu der Förderlängsrichtung (X) bewegbar ist, so dass nach Bearbeitung einer Seitenkante der Platte (L) die Platte quer zu der Förderlängsrichtung (X) in eine Position bewegbar ist, in der diese um die vertikale Achse (9) drehbar ist, ohne in die stationäre Bearbeitungseinheit (4) einzugreifen, wonach die Platte (L) in die Ausgangsposition zurückbringbar ist, um mit der Bearbeitung einer anderen Kante der Platte (L) zu beginnen.

3. Maschine nach Anspruch 2, **dadurch gekennzeichnet, dass** der Schlitten (C), der die Gruppe (G) von Plattengreifelementen (7) trägt, in Förderlängsrichtung (X) entlang eines Längsbalkens (B) bewegbar ist, der gegenüberliegende Enden aufweist, die an der stationären Struktur (2) der Maschine (1) in der Querrichtung (Y) orthogonal zu der Förderlängsrichtung (X) des Balkens (B) verschiebbar montiert sind.

4. Maschine nach Anspruch 1, **dadurch gekennzeichnet, dass** der stationären Bearbeitungseinheit (4) eine Fördervorrichtung (14) zugeordnet ist, um eine Platte (L) entlang der Förderlängsrichtung (X) so vorwärts zu bewegen, dass eine seitliche Kante der Platte (L) nacheinander in die Schleifwerkzeuge (40-44) der stationären Bearbeitungseinheit (4) eingreift, wobei die Vorrichtung zur Betätigung der Längsbewegung des Schlittens (C), der die Gruppe (G) von Plattengreifelementen (7) trägt, so gesteuert wird, dass die Gruppe der Plattengreifelemente (7) synchron mit der Fördervorrichtung (14) bewegt wird.

5. Maschine nach Anspruch 4, **dadurch gekennzeichnet, dass** die Fördervorrichtung (14) einen oberen Bandförderer (14A) und einen unteren Bandförderer (14B) umfasst, die positioniert und ausgebildet sind, dazwischen eine Platte (L) derart aufnehmen, um die Platte in Förderlängsrichtung (X) vorwärts zu bewegen.

6. Maschine nach Anspruch 1, **dadurch gekennzeichnet, dass** der Schlitten (C) die Gruppe der Plattengreifelemente (7) einzeln oder in Gruppen in Positionen trägt, die in der horizontalen Querrichtung (Y) und in der Förderlängsrichtung (X) mittels elektronisch gesteuerter Stellvorrichtungen (10) verstellbar sind.

7. Maschine nach Anspruch 6, **dadurch gekennzeichnet, dass** jedes Greifelement (7) vertikal bewegbar ist.

8. Maschine nach Anspruch 1, **dadurch gekennzeichnet, dass** diese ein Positionierungssystem für die Platte (L) umfasst, um die Platte bezüglich der stationären Bearbeitungseinheit (4) entlang der Förderlängsrichtung (X) und entlang der Förderrichtung und entlang der horizontalen Querrichtung (Y) zu Beginn eines Bearbeitungszyklus, bevor die Platte auf der Gruppe (G) von Plattengreifelementen (7) gesichert wird, in Position zu platzieren, wobei die Greifelemente die Platte dann bezüglich der vertikalen Richtung platzieren, und
dass nach Bearbeitung einer ersten Seitenkante der Platte die Gruppe der Greifelemente (7) immer so lange an der Platte in Eingriff gehalten wird, bis die Bearbeitung aller zu bearbeitenden Seitenkanten der Platte, die maschinell zu bearbeiten sind, abgeschlossen ist, so dass der Vorgang zur Platzierung der Platte in Position nicht wiederholt werden muss, bevor eine weitere Seitenkante der Platte bearbeitet wird.

9. Maschine nach Anspruch 8, **dadurch gekennzeichnet, dass** das Plattenpositionierungssystem ein Anschlagelement (Z1) umfasst, das vorübergehend in eine angehobene Position positionierbar ist, in welcher es von einer Vorderkante einer maschinell zu bearbeitenden Platte (L) erfassbar ist, um die Platte (L) bezüglich der Förderlängsrichtung (X) in Position zu platzieren.

10. Maschine nach Anspruch 9, **dadurch gekennzeichnet, dass** das Plattenpositionierungssystem ferner eine Seitenwand (12) zum Anliegen an die Platte aufweist, die durch eine Betätigungsvorrichtung (13) in der Querhorizontalen (Y) orthogonal zu der Förderlängsrichtung (X) bewegbar ist, um eine maschinell zu bearbeitende Platte (L) bis zu einer vorbestimmten Querposition bezüglich der Schleifwerkzeuge (40-44) der stationären Bearbeitungseinheit (4) zu schieben.

11. Maschine nach Anspruch 1, **dadurch gekennzeichnet, dass** diese einen Plattenladeabschnitt mit einem Plattenfördersystem (11) umfasst, das ausgebildet ist, eine maschinell zu bearbeitende Platte aufzunehmen und über die Gruppe (G) von Plattengreifelementen (7) zu bringen.

12. Maschine nach Anspruch 1, **dadurch gekennzeichnet, dass** vor und/oder nach der Reihe von Schleifwerkzeugen (40-44) eine Anfasvorrichtung (16) und/oder eine Radiusvorrichtung (R) zur Herstellung einer Fasung und/oder eines gebogenen Profils an einer Ecke (V) der Platte (L) vorgesehen sind.

13. Maschine nach Anspruch 1, **dadurch gekennzeichnet, dass** diese zwei oder mehr Schlitten (C1, C2) umfasst, die jeweilige Einheiten von Greifelementen (G1, G2) tragen, um jeweilige maschinell zu bearbeitende Platten (L1, L2) zu greifen, wobei jeder Schlitten (C1, C2) sowohl in der Förderlängsrichtung (X) als auch in der horizontalen Querrichtung (Y) orthogonal zu der Förderlängsrichtung (X) mittels entsprechender elektronisch gesteuerter Betätigungsvorrichtungen verschiebbar ist.

14. Maschine nach Anspruch 1, **dadurch gekennzeichnet, dass** diese eines der folgenden weiteren Merkmale aufweist:
- die Greifelemente (7) weisen Formen auf, die je nach Form und Größe der maschinell zu bearbeitenden Platte ausgewählt sind, und/oder weisen voneinander unterschiedliche Größen oder Formen auf,
- der Schlitten (C), der die Gruppe (G) von Greifelementen trägt, ist mit Anschlagelementen versehen, die auf der/den Seite(n) gegenüber der Bearbeitungsseite automatisch aktiviert werden, um den von den Werkzeugen während der Bearbeitung ausgeübten Kräften entgegenzuwirken,
- eines der Greifelemente (7) ist mit Anschlagelementen zum automatischen Positionieren und Zentrieren von Platten mit relativ geringen Abmessungen versehen,
- stromabwärts und/oder stromaufwärts der stationären Bearbeitungseinheit (4) sind Hilfseinheiten positioniert, um einen Schneidvorgang in unterschiedlichen Winkeln auf einer oder mehreren Seiten der Platte durchzuführen,
- stromabwärts und/oder stromaufwärts der stationären Bearbeitungseinheit (4) sind Hilfseinheiten zur Oberflächenbearbeitung der Platte angeordnet.

15. Verfahren zur Bearbeitung von Seitenkanten von Glasplatten, Platten aus Steinmaterial oder Platten aus Kunststoff, umfassend:
- Bereitstellen einer Gruppe (G) von Plattengreifelementen (7), die ausgebildet sind, eine Platte (L) in einer horizontalen Position während einer Bearbeitung der Platte zu halten,
- Vorwärtsbewegen der Gruppe (G) von Plattengreifelementen (7) in einer Förderlängsrichtung (X) der Platte, so dass eine seitliche Kante der Platte (L) nacheinander mit einer Reihe von Schleifwerkzeugen (40-44) in Eingriff gebracht wird, die Teil einer stationären Bearbeitungseinheit (4) sind und in der Förderlängsrichtung (X) der Platte ausgerichtet sind,
wobei das Verfahren **dadurch gekennzeichnet ist, dass** die Plattengreifelemente (7) von einem Schlitten (C) getragen werden, der in der Förderlängsrichtung (X) beweglich ist, derart, dass die Plattengreifelemente in Position bezüglich des Schlittens (C) und relativ zueinander mittels elektronisch gesteuerter Betätigungsvorrichtungen einstellbar sind, und
dass vor Beginn eines Plattenbearbeitungszyklus die Plattengreifelemente (L) durch die elektronisch gesteuerten Betätigungsvorrichtungen in Abhängigkeit von der Größe und/oder Form der Platte (L) in Position so eingestellt werden, dass die Greifelemente in solchen Positionen angeordnet werden, dass sichergestellt ist, dass die Platte während der Bearbeitung der Platte fest in einer horizontalen Position auf dem Schlitten (C) verriegelt ist, und
dass der Schlitten (C), der die Gruppe (G) von Plattengreifelementen (7) trägt, die Gruppe drehbar um eine vertikale Achse (9) trägt, und mit einer elektronisch gesteuerten Betätigungsvorrichtung zur Steuerung der Drehung der Gruppe (G) um die vertikale Achse (9) versehen ist, und wobei nach Bearbeitung einer Seitenkante einer Platte (L) die Platte in eine Position gebracht wird, die außer Eingriff der Schleifwerkzeuge (40-44) der stationären Bearbeitungseinheit (4) ist, und um die vertikale Achse (9) gedreht wird, um dann wieder in eine Ausgangsposition für eine anschließende Bearbeitung einer anderen Kante der Platte (L) durch die Schleifwerkzeuge (40-44) der stationären Bearbeitungseinheit (4) zurückgebracht zu werden.

16. Verfahren nach Anspruch 15, **dadurch gekennzeichnet, dass** der Schlitten (C), der die Gruppe von Greifelementen für die Platte (L) trägt, auch durch eine elektronisch gesteuerte Betätigungsvorrichtung in einer horizontalen Querrichtung (Y) orthogonal zu der Förderlängsrichtung (X) bewegbar ist, und wobei nach Bearbeitung einer Seitenkante der Platte (L) die Platte in der Querrichtung (Y) orthogonal zu der Förderlängsrichtung (X) auf eine Position verschoben wird, in der diese um die vertikale Achse (9) gedreht ist, ohne in die stationäre Bearbeitungseinheit (4) einzugreifen, wonach die Platte (L) in die Ausgangsposition zurückgebracht wird, um mit der Bearbeitung einer anderen Kante der Platte zu beginnen.

17. Verfahren nach Anspruch 15, **dadurch gekennzeichnet, dass** der stationären Bearbeitungseinheit (4) eine Fördervorrichtung (14) zugeordnet ist, welche eine Platte (L) entlang der Förderlängsrichtung (X) vorwärts bewegt, so dass eine seitliche Kante der Platte (L) nacheinander in die Schleifwerkzeuge (40-44) der stationären Bearbeitungseinheit (4) eingreift, während die Vorrichtung zur Betätigung der Längsbewegung der Gruppe (G) von Plattengreifelementen (7) so gesteuert wird, dass die Gruppe (G) der Plattengreifelemente (7) synchron mit der Fördervorrichtung (14) bewegt wird.

18. Verfahren nach Anspruch 15, **dadurch gekennzeichnet, dass** zu Beginn eines maschinellen Bearbeitungszyklus einer Platte (L) die Platte bezüglich der stationären Bearbeitungseinheit (4) entlang der Förderlängsrichtung (X) und entlang der Querrichtung (Y) in Position platziert wird, wobei danach die Platte von der Gruppe (G) von Plattengreifelementen (7) gegriffen wird, welche die Platte in Position bezüglich der vertikalen Richtung orthogonal zu der Platte platzieren, und
dass nach Bearbeitung einer ersten Seitenkante der Platte die Platte durch die Gruppe der Greifelemente (7) immer so lange in Eingriff gehalten wird, bis die Bearbeitung aller zu bearbeitenden Seitenkanten der Platte, die maschinell zu bearbeiten sind, abgeschlossen ist, so dass der Vorgang zur Platzierung der Platte in Position nicht wiederholt werden muss, bevor eine weitere Seitenkante der Platte bearbeitet wird.

19. Verfahren nach Anspruch 15, **dadurch gekennzeichnet, dass** vor oder nach dem Schleifen einer Seitenkante der Platte mindestens eine Ecke (W) der Platte einem Prozess zur Bildung einer Fase oder eines gekrümmten Profils an der Ecke unterzogen wird.

20. Verfahren nach Anspruch 15, **dadurch gekennzeichnet, dass** zwei oder mehr Schlitten (C1, C2) angeordnet sind, die jeweilige Gruppen von Plattengreifelementen (G1, G2) tragen, die jeweilige Platten (L1, L2) aufnehmen, die dazu gebracht werden, sich nacheinander bezüglich der stationären Bearbeitungseinheit (4) vorwärts zu bewegen, um eine Seitenkante jeder Platte zu bearbeiten.

## Revendications

1. Machine de traitement de bords latéraux de plaques de verre, de plaques en pierre ou de plaques de matériau synthétique, la machine comprenant :
- une structure de support stationnaire (2),
- un groupe (G) d'organes de préhension de plaque (7), configuré pour maintenir une plaque (L) dans une position horizontale pendant le traitement de plaque,
- dans lequel le groupe (G) d'organes de préhension de plaque (7) est porté par un chariot (C) mobile au moins dans une direction longitudinale de convoyage de plaque (X),
- une unité d'usinage stationnaire (4) pour usiner un bord latéral de la plaque (L), l'unité étant portée par ladite structure de support stationnaire (2) et comportant une série d'outils de meulage (40-44) alignés le long de la direction longitudinale de convoyage (X), de manière à venir en prise successivement avec un bord latéral d'une plaque (L) qui avance le long de ladite direction longitudinale de convoyage (X),
- dans lequel, ledit chariot (C) portant le groupe (G) d'organes de préhension de plaque (7) est associé à un dispositif actionneur à commande électronique, configuré pour déplacer le chariot (C) le long de ladite direction longitudinale de convoyage (X),
ladite machine étant **caractérisée en ce que** les organes de préhension de plaque (7) sont réglables en position par rapport au chariot (C), et l'un par rapport à l'autre au moyen de dispositifs actionneurs à commande électronique, et **en ce que** la machine comprend une unité de commande électronique (E) configurée pour régler la position des organes de préhension avant de traiter la plaque, en fonction de la taille et/ou de la forme de la plaque (L), de manière à disposer les organes de préhension de manière à assurer le verrouillage ferme de la plaque dans une position horizontale sur le chariot (C) pendant le traitement de la plaque, et
**en ce que** le groupe (G) d'organes de préhension de plaque (7) est supporté en rotation par le chariot (C) autour d'un axe vertical (9), et est configuré pour être orienté autour de cet axe vertical (9) au moyen d'un dispositif actionneur à commande électronique,
de telle sorte qu'après traitement d'un bord latéral d'une plaque (L), la plaque (L) peut être amenée à une position hors d'interférence avec les outils de meulage (40-44) de l'unité d'usinage stationnaire (4), et peut être ensuite mise en rotation autour dudit axe vertical (9) et ramenée à une position de départ par rapport à l'unité d'usinage stationnaire (4), pour un traitement ultérieur d'un autre bord latéral de la plaque (L) au moyen desdits outils de meulage (40-44) de l'unité d'usinage stationnaire (4).

2. Machine selon la revendication 1, **caractérisée en ce que** le chariot (C) portant le groupe d'organes de préhension de plaque (7) peut également être déplacé par un dispositif actionneur à commande électronique dans une direction horizontale transversale (Y), orthogonale à ladite direction longitudinale de convoyage (X), de sorte qu'après traitement d'un bord latéral de la plaque (L), la plaque peut être déplacée transversalement par rapport à la direction longitudinale de convoyage (X) jusqu'à une position dans laquelle elle peut être tournée autour dudit axe vertical (9) sans interférer avec ladite unité d'usinage stationnaire (4), après quoi la plaque (L) peut être ramenée à ladite position de départ pour démarrer le traitement d'un autre bord de la plaque (L).

3. Machine selon la revendication 2, **caractérisée en ce que** ledit chariot (C) portant le groupe (G) d'organes de préhension de plaque (7) est mobile dans la direction longitudinale de convoyage (X) le long d'une poutre longitudinale (B), qui présente des extrémités opposées montées de manière coulissante sur la structure stationnaire (2) de la machine (1) dans ladite direction transversale (Y), orthogonale à la direction longitudinale de convoyage (X) de la poutre (B).

4. Machine selon la revendication 1, **caractérisée en ce qu'**un dispositif de convoyage (14) est associé à ladite unité d'usinage stationnaire (4) pour faire avancer une plaque (L) le long de ladite direction longitudinale de convoyage (X), de sorte qu'un bord latéral de la plaque (L) entre en prise avec les outils de meulage (40-44) de ladite unité d'usinage stationnaire (4) successivement, ledit dispositif pour actionner le mouvement longitudinal du chariot (C) portant le groupe (G) d'organes de préhension de plaque (7) étant commandé de manière à déplacer le groupe d'organes de préhension de plaque (7) en synchronisme avec ledit dispositif de convoyage (14).

5. Machine selon la revendication 4, **caractérisée en ce que** le dispositif de convoyage (14) comprend un tapis roulant supérieur (14A) et un tapis roulant inférieur (14B) positionnés et configurés pour recevoir une plaque (L) entre eux de manière à faire avancer la plaque dans la direction longitudinale de convoyage (X).

6. Machine selon la revendication 1, **caractérisée en ce que** le chariot (C) porte le groupe d'organes de préhension de plaque (7), individuellement ou en groupes, à des positions qui sont réglables dans une direction horizontale transversale (Y) et dans une direction longitudinale de convoyage (X) au moyen de dispositifs d'actionnement à commande électronique (10).

7. Machine selon la revendication 6, **caractérisée en ce que** chaque organe de préhension (7) peut être déplacé verticalement.

8. Machine selon la revendication 1, **caractérisée en ce qu'**elle comprend un système de positionnement de plaque (L), pour fixer la plaque en position par rapport à l'unité d'usinage stationnaire (4) le long de la direction longitudinale de convoyage (X) et le long de la direction horizontale transversale (Y), au début d'un cycle d'usinage, avant le verrouillage de la plaque sur ledit groupe (G) d'organes de préhension de plaque (7), les organes de préhension fixant alors la plaque en position par rapport à la direction verticale, et
**en ce qu'**après traitement d'un premier bord latéral de la plaque, le groupe d'organes de préhension (7) est toujours maintenu en prise avec la plaque jusqu'à ce que le traitement de tous les bords latéraux de la plaque à usiner ait été achevé, de sorte que l'opération de fixation de la plaque en position ne doit pas être répétée avant de traiter un autre bord latéral de la plaque.

9. Machine selon la revendication 8, **caractérisée en ce que** ledit système de positionnement de plaque comprend un élément de butée (Z1), qui peut être positionné temporairement dans une position relevée dans laquelle il peut être engagé par un bord avant d'une plaque (L) à usiner, de manière à fixer la plaque (L) en position par rapport à la direction longitudinale de convoyage (X).

10. Machine selon la revendication 9, **caractérisée en ce que** le système de positionnement de plaque comprend en outre une paroi latérale (12) destinée à venir en butée contre la plaque, qui peut être déplacée par un dispositif actionneur (13) dans la direction horizontale transversale (Y) orthogonale à ladite direction longitudinale de convoyage (X), pour pousser une plaque (L) à usiner transversalement jusqu'à une position transversale prédéterminée par rapport aux outils de meulage (40-44) de ladite unité d'usinage stationnaire (4).

11. Machine selon la revendication 1, **caractérisée en ce qu'**elle comprend une section de chargement de plaque avec un système de convoyage de plaque (11), configuré pour recevoir une plaque à usiner et pour l'amener au-dessus du groupe (G) d'organes de préhension de plaque (7).

12. Machine selon la revendication 1, **caractérisée en ce qu'**en amont et/ou en aval de ladite série d'outils de meulage (40-44), un dispositif de chanfreinage (16) et/ou un dispositif de tournage d'arrondi (R) sont prévus pour réaliser un chanfrein et/ou un profil incurvé sur un coin (V) de la plaque (L).

13. Machine selon la revendication 1, **caractérisée en ce qu'**elle comprend deux chariots (C1, C2) ou plus portant des unités respectives d'organes de préhension (G1, G2) pour saisir des plaques respectives (L1, L2) à usiner, chaque chariot (C1, C2) pouvant être déplacé à la fois dans ladite direction longitudinale de convoyage (X) et dans ladite direction horizontale transversale (Y) orthogonale à la direction longitudinale de convoyage (X), au moyen de dispositifs actionneurs à commande électronique respectifs.

14. Machine selon la revendication 1, **caractérisée en ce qu'**elle comprend une ou plusieurs des caractéristiques supplémentaires suivantes :
- les organes de préhension (7) présentent des formes sélectionnées en fonction de la forme et de la taille de la plaque à usiner et/ou ont des tailles ou des formes différentes les unes des autres,
- le chariot (C) portant le groupe (G) d'organes de préhension est équipé d'organes de butée qui sont activés automatiquement sur le ou les côtés opposés au côté de traitement pour contrebalancer les forces exercées par les outils pendant le traitement,
- l'un des organes de préhension (7) est équipé d'organes de butée pour positionner et centrer automatiquement des plaques de dimensions relativement réduites,
- en aval et/ou en amont de l'unité d'usinage stationnaire (4), des unités auxiliaires sont positionnées pour effectuer une opération de découpage, à différents angles, sur un ou plusieurs côtés de la plaque,
- en aval et/ou en amont de l'unité d'usinage stationnaire (4), des unités auxiliaires sont positionnées pour l'usinage de surface de la plaque.

15. Procédé de traitement de bords latéraux de plaques de verre, de plaques en pierre ou de plaques de matériau synthétique, comprenant :
- la fourniture d'un groupe (G) d'organes de préhension de plaque (7), configurés pour maintenir une plaque (L) dans une position horizontale pendant le traitement de la plaque,
- l'avance dudit groupe (G) d'organes de préhension de plaque (7) dans une direction longitudinale de convoyage (X) de la plaque, de manière à amener un bord latéral de la plaque (L) à venir en prise successivement avec une série d'outils de meulage (40-44) faisant partie d'une unité d'usinage stationnaire (4), et alignés dans ladite direction longitudinale de convoyage (X) de la plaque,
ledit procédé étant **caractérisé en ce que** lesdits organes de préhension de plaque (7) sont portés par un chariot (C) mobile dans ladite direction longitudinale de convoyage (X), de telle sorte que les organes de préhension sont réglables en position, au moyen de dispositifs d'actionnement à commande électronique, par rapport au chariot (C) et l'un par rapport à l'autre, et
**en ce qu'**avant le début d'un cycle de traitement de plaque, lesdits organes de préhension de plaque (L) sont réglés en position par lesdits dispositifs actionneurs à commande électronique en fonction de la taille et/ou de la forme de la plaque (L), de manière à disposer les organes de préhension dans de telles positions de manière à assurer que la plaque est fermement verrouillée dans une position horizontale sur le chariot (C) pendant le traitement de la plaque, et
**en ce que** ledit chariot (C) portant le groupe (G) d'organes de préhension de plaque (7) supporte de manière rotative ledit groupe autour d'un axe vertical (9), et est pourvu d'un dispositif actionneur à commande électronique pour commander la rotation dudit groupe (G) autour dudit axe vertical (9), et dans lequel, après le traitement d'un bord latéral d'une plaque (L), la plaque est amenée à une position hors d'interférence avec les outils de meulage (40-44) de l'unité d'usinage stationnaire (4), et est mis en rotation autour dudit axe vertical (9) pour être ensuite ramené à une position de départ pour un traitement ultérieur d'un autre bord de la plaque (L) par lesdits outils de meulage (40-44) de l'unité d'usinage stationnaire (4).

16. Procédé selon la revendication 15, **caractérisé en ce que** le chariot (C) portant le groupe d'organes de préhension de plaque (L) peut également être déplacé par un dispositif actionneur à commande électronique dans une direction horizontale transversale (Y), orthogonale à ladite direction longitudinale de convoyage (X) et dans lequel après le traitement d'un bord latéral de la plaque (L), la plaque est déplacée dans la direction transversale (Y) orthogonale à la direction longitudinale de convoyage (X) jusqu'à une position dans laquelle il est mis en rotation autour dudit axe vertical (9) sans interférer avec ladite unité stationnaire d'outils (4), après quoi la plaque (L) est ramenée à ladite position de départ pour démarrer le traitement d'un autre bord de la plaque.

17. Procédé selon la revendication 15, **caractérisé en ce que** l'unité d'usinage stationnaire (4) est associée à un dispositif de convoyage (14), qui fait avancer une plaque (L) le long de la direction longitudinale de convoyage de plaque (X) de telle sorte qu'un bord latéral de la plaque (L) vient en prise successivement avec les outils de meulage (40-44) de ladite unité d'usinage stationnaire (4), alors que le dispositif d'actionnement du déplacement longitudinal du groupe (G) d'organes de préhension de plaque (7) est commandé de manière à déplacer le groupe (G) d'organes de préhension (7) en synchronisme avec ledit dispositif de convoyage (14).

18. Procédé selon la revendication 15, **caractérisé en ce qu'**au début d'un cycle d'usinage d'une plaque (L), la plaque est fixée en position par rapport à l'unité d'usinage stationnaire (4) le long de la direction longitudinale (X) et le long la direction transversale (Y), après quoi la plaque est saisie par ledit groupe (G) d'organes de préhension de plaque (7), qui fixent la plaque en position par rapport à la direction verticale orthogonale à la plaque, et
**en ce qu'**après traitement d'un premier bord latéral de la plaque, la plaque reste toujours en prise par ledit groupe d'organes de préhension (7) jusqu'à ce que le traitement de tous les bords latéraux de la plaque à usiner soit terminé, de telle sorte que l'opération de fixation de la plaque en position ne doit pas être répétée avant de traiter un autre bord latéral de la plaque.

19. Procédé selon la revendication 15, **caractérisé en ce qu'**avant ou après le meulage d'un bord latéral de la plaque, au moins un coin (W) de la plaque est soumis à un procédé pour former un chanfrein ou un profil incurvé au niveau du coin.

20. Procédé selon la revendication 15, **caractérisé en ce que** deux chariots (C1, C2) ou plus sont disposés, portant des groupes respectifs d'organes de préhension de plaque (G1, G2), qui reçoivent des plaques respectives (L1, L2) qui sont amenées à avancer l'une après l'autre par rapport à ladite unité d'usinage stationnaire (4) pour traiter un bord latéral de chaque plaque.
